# EUROPEAN PATENT SPECIFICATION

(11) **EP 4 121 478 B1**
(45) Date of publication and mention of the grant of the patent: **07.08.2024**
(21) Application number: 21711295.2
(22) Date of filing: 17.03.2021
(51) Int. Cl.: C08K 3/34, C08K 3/36, C08L 79/02, C08L 63/00

(54) **RHEOLOGY CONTROL AGENT**
RHEOLOGIESTEUERUNGSMITTEL
AGENT DE CONTRÔLE DE RHÉOLOGIE

(30) Priority: 17.03.2020 EP 20163737
(43) Date of publication of application: 25.01.2023
(73) Proprietor: BYK-Chemie GmbH, 46483 Wesel (DE)
(72) Inventor: KNAPPKE-BONGARTZ, Christiane, 46483 Wesel (DE); NAGELSDIEK, René, 46483 Wesel (DE); BÜHNE, Sylvia, 46483 Wesel (DE); MOELLERS, Kathrin, 46483 Wesel (DE); BOECKMANN, Verena, 46483 Wesel (DE)
(74) Representative: Altana IP Department
(86) International application number: PCT/EP2021/056804
(87) International publication number: WO 2021/185898

(56) References cited:
- US-A1- 2019 292 439
- DATABASE WPI Week 200880, Derwent World Patents Index; AN 2008-N75488, XP002799742
- DATABASE WPI Week 199510, Derwent World Patents Index; AN 1995-070448, XP002799746
- DATABASE WPI Week 201735, Derwent World Patents Index; AN 2017-30257Q, XP002799747

## Description

The present invention relates to a use of a composition as rheology control agent, a kit of parts and a process.

In the field of coating materials, adhesives, sealants, plastics formulations, liquid formulations used for the exploration and production of gas and oil as well as molding compounds, and the like, it is necessary to customize the rheological properties of such liquid systems, primarily through adjusting the viscosity. This can be done by the selection of binding agents, solvents and the concentration of pigments and/or fillers. Often, the addition of so-called rheology additives to these liquids is required. The effect of these additives lays in adjusting the rheological properties of the system, like the viscosity and the viscoelastic properties. By doing so, the system properties are usually improved with respect to sag resistance, improved storage stability (due to reduced settling of solid particles), or a general increase in viscosity, often referred to as "thickening".

Typical rheology additives for non-aqueous systems include, in addition to organic thickeners such as amides or urea-based thickeners, inorganic thickeners such as, for example silica and layered silicates. Among layered silicates, clay materials are often used as thickeners; among these, organically modified clay materials (also known as organoclays) are used in the art. Organoclays are widely used as thickeners for organic solvents or organic coating systems like paints and varnishes and in composites as well. Beside improvement of the storage stability of the organic systems by preventing the de-mixing and sedimentation of pigments and fillers in the system, a further purpose is to increase the sag resistance of liquid organic systems. Usually, organoclays are made from natural or synthetic clays, typically representing the reaction product of a clay with a modification agent, for example a higher alkyl containing ammonium compound, rendering the hydrophilic clay hydrophobic. This leads to an improved compatibility with organic materials. The use of such modified clays as rheology additives is described for example in WO 97/17398 and US 6,036,765.

JP2008280382A relates to an epoxy resin composition containing silica fine powder and a polyalkylene imine resin modified using a compound having an epoxy group. The epoxy resin composition has improved compatibility with respect to epoxy hardener, preservability and thixotropy effect.

Organically modified silica is commonly prepared by treating silica with organic compounds, such as organo alkoxysilanes, hexamethyldisilazane, chlorosilanes,
carboxylic acids, and the like. As with organoclays, the organic treatment of the silica results in an improved compatibility with organic materials.

Those rheology additives need to comply with a multiplicity of requirements. They have to show not only an improved rheological activity in the application system, but also a broad compatibility in application-relevant formulations as well.

Moreover, improvement or maintenance of the rheological properties in the application system, even after storage of the components is desired. There is still an ongoing need to provide improved rheology additives. Using the improved rheology additive should lead to very reliable and increased thickening effects in various non-aqueous formulations.

Thus, it is a particular object of the present invention to provide a high-quality rheology control agent of good effectiveness, which is employable in numerous application systems. More particularly the intention was to find rheology control agents resulting in a pronounced anti-sag behavior. Particularly, a high layer thickness of applied liquid compositions (such as coatings, gelcoats, adhesives or sealants) should result without sagging.

Surprisingly it has been found that these objectives can be achieved by a use of a composition as rheology control agent comprising (A) silicate and (B) a polyethyleneimine, modified by reaction with an epoxide compound, comprising the structure (I) 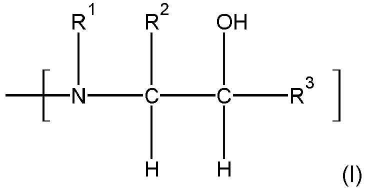 wherein R¹ is H, 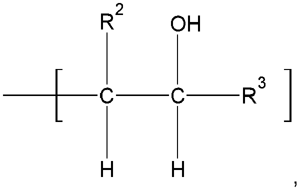 or part of the polyethylenimine, and wherein R² is H or an organic group, R³ is H or an organic group, with the proviso that one of R² or R³ is H and wherein the polyethyleneimine has a weight average molecular weight M_{W} in the range of 40000 to 300000 g/mol before the reaction with the epoxide compound.

In a preferred embodiment, R² and R³ together have at least 4 carbon atoms, more preferably at least 6 carbon atoms, even more preferably at least 8 carbon atoms. It is further preferred that these carbon atoms are part of a hydrocarbyl group not interrupted by ether groups.

The use can also be described as a process of controlling the rheology of a
preparation comprising the steps of
i) providing a silicate (A)
ii) providing a polyethyleneimine (B),
   modified by reaction with an epoxide
   compound, comprising the structure (I) 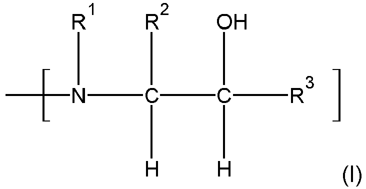
   wherein R¹ is H, 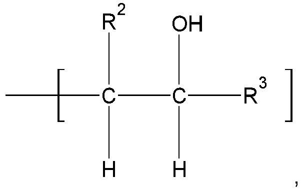 or part of the polyethylenimine, and
   wherein R² is H or an organic group, R³ is H or an organic group, with the proviso that one of R² or R³ is H and wherein the polyethyleneimine has a weight average molecular weight Mw in the range of 40000 to 300000 g/mol before the reaction with the epoxide compound
iii) providing a preparation and
iv) adding to the preparation the silicate (A) and the modified polyethyleneimine (B) either separately or in combination.

Not only does the use of the composition according to the invention lead to an improved rheological behavior, but unexpectedly a synergism between those two components is showing, which led to an even better result in terms of anti-sag- behavior.

Preferably, the silicate (A) is a clay, silica or a mixture thereof. Generally, clays are selected from the group consisting of organically modified clays and non-modified clays whereas silica are selected from the group consisting of modified silica and non-modified silica. Suitable clays may be natural occurring clays or synthetic clays. Preferably, the silicate (A) is an organically modified clay or a non-modified silica.

Suitably, the composition comprises a mixture of at least two different types of clay. Suitable examples are mixtures of hormite clays (e.g. sepiolite, palygorskite) and smectite clays. Most suitable are mixtures of sepiolite clays and smectite clays. Both sepiolite and palygorskite are included in the phyllosilicates because they contain a continuous two-dimensional sheet of SiO4 tetrahedrons, but they differ from the other layer silicates in lacking continuous octahedral sheets. Sepiolites and palygorskites show a needle shape structure, whereas the smectite clays show a platelet shape structure. Of the two mentioned hormite clays, sepiolite is preferred for use in the invention. The smectite is preferably a natural or synthetic clay mineral selected from the group consisting of hectorite, montmorillonite, bentonite, beidelite, saponite, stevensite, and mixtures thereof. A particularly preferred choice of the smectite is hectorite, montmorillonite, and saponite.

Suitably, the clay, has been modified with an organic ammonium salt having one or more hydrocarbon chains linked to the ammonium group having at least 10 carbon atoms per hydrocarbon chain. Suitably, the hydrocarbon chain linked to the ammonium group has at least 14, more suitably at least 16 carbon atoms.

Preferably, the organic ammonium salt is a quaternary ammonium salt. The quaternary ammonium salts employed for treating the mineral clay mixtures typically comprise alkyl and/or arylalkyl quaternary ammonium salts containing the same or different straight- and/or branched-chain saturated and/or unsaturated alkyl groups of 1 to 30 carbon atoms and the anion is selected from the group consisting of chloride, bromide, methylsulfate, nitrate, hydroxide, acetate, phosphate and mixtures thereof, preferably chloride, bromide and methylsulfate.

Preferred choices of the quaternary ammonium salts are dimethyl di(hydrogenated tallow) ammonium chloride, methylbenzyl di(hydrogenated tallow) ammonium chloride, dimethylbenzyl hydrogenated tallow ammonium chloride, dimethyl hydrogenated tallow-2-ethylhexylammonium methylsulfate and mixtures of two or more of the preferred choices. Instead of the quaternary ammonium salts comprising hydrogenated tallow groups, similar products originating from vegetable or synthetic sources can be used. The mineral clay mixture is typically treated with 5 to 150 meq., preferably with 5 to 80 meq. of the quaternary ammonium salt per 100 g of the mixture.

In another embodiment, the quaternary ammonium salts employed for treating the mineral clay mixtures comprise so called esterquat quaternary ammonium salts in which the quaternary ammonium group is attached to at least one hydrocarbyl group via an ester bond. For the counterion (anion) of the esterquat and the amount of esterquat per clay, the same applies as mentioned before for the clay mixtures treated with alkyl quaternary ammonium salts. Examples of these kind of organoclays can be found in US 5718841 A and EP 798267 B1.

Examples for suitable silicas are modified and non-modified silica. Preferably, this modified or non-modified silica is a pyrogenic silica. Non-modified silicas are not chemically treated and generally have hydrophilic properties.

Modified silicas have generally been chemically treated with organic compounds, such as silanes or siloxanes, carboxylic acids, and the like and often have hydrophobic properties. This treatment results in an improved compatibility with organic materials.

Suitably, the composition comprises 50.0 to 99.9 % by weight of the silicate (A), more suitably 60.0 to 99.8 % by weight, even more suitably 70.0 to 99.7 % by weight, most suitably 90.0 to 99.5 % by weight, calculated on the weight of the components (A) and (B).

Component B is a polyethylenimine comprising the structure (I) 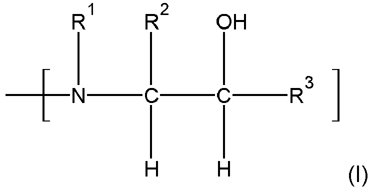
wherein R¹ is H, 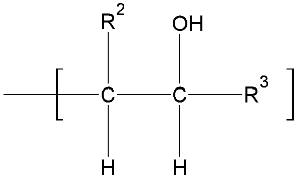 or part of the polyethylenimine, and
wherein R² is H or an organic group, R³ is H or an organic group, with the proviso that one of R² or R³ is H.

Polyethylenimine is a polymer comprising repeating units of formula (II)

-NHCH2CH2-.

Polyethylenimines can have a linear or branched structure, preferably they are branched. Branched polyethylenimines have primary, secondary, and tertiary amine groups. The molar ratio of primary amine groups to secondary amine groups suitably is in the range of 1.00 : 0.70 to 1.00 : 1.30, preferably in the range of 1.00 : 0.80 to 1.00 : 1.20. The molar ratio of primary amine groups to tertiaryamine groups suitably is in the range of 1.00 : 0.40 to 1.00 : 1.10, preferably in the range of 1.00 : 0.50 to 1.00 : 1.00. The ratio of primary, secondary, and tertiary amine groups can for example be determined by ¹³C NMR spectroscopy.

Polyethylenimine is obtainable by ring opening polymerization of aziridine.

Generally, the modified polyethylenimine component B is obtainable by reacting a polyethylenimine with at least one compound having at least one epoxide group.

Preferably, the compound having at least one epoxide group has 3 to 25 carbon atoms. More preferably, the compound has 4 to 20 carbon atoms.

Suitable compounds having at least one epoxide group are glycidylethers, glycidylesters, epoxidized olefins, suitably epoxidized alpha-olefins.

Preferred glycidylethers are glycidylethers having a C2 to C30 hydrocarbyl group attached to the ether atom. The hydrocarbyl group can be aliphatic (including cycloaliphatic), aromatic, araliphatic and it can be linear or branched, saturated or unsaturated. Preferably, the group is selected from C4 to C24 aliphatic groups and substituted or non-substituted phenyl groups. Very preferably, the group is selected from saturated C6 to C18 aliphatic group, like a C8 to C16 alkyl group. Suitable examples are n-butyl glycidyl ether, 2-ethylhexyl glycidyl ether, C8-C10 aliphatic glycidyl ether, C12-C14 aliphatic glycidyl ether, C13-C15-alkyl glycidyl ether, oleyl glycidyl ether, allyl glycidyl ether as well as cresyl glycidyl ether, p-tert-butyl phenyl glycidyl ether, nonyl phenyl glycidyl ether, phenyl glycidyl ether, naphthyl glycidyl ether. Preferred examples are 2-ethylhexyl glycidyl ether and C12-C14 aliphatic glycidyl ether, and C13-C15-alkyl glycidyl ether.

Preferred glycidylesters are glycidylesters having a C2 to C30 hydrocarbyl group attached to the ester group. The hydrocarbyl group can be aliphatic (including cycloaliphatic), aromatic, araliphatic and it can be linear or branched, saturated or unsaturated. Preferably, the group is selected from C4 to C24 aliphatic groups and substituted or non-substituted phenyl groups. Very preferably, the group is selected from saturated C6 to C18 aliphatic group, like a C8 to C16 alkyl group.

Suitable examples are 2-ethylhexyl glycidyl ester and the glycidyl ester of neodecanoic acid.

Preferred epoxidized olefins are those based on alpha-olefins comprising 4 to 30 carbon atoms. The hydrocarbyl group attached to the epoxy group can be aliphatic (including cycloaliphatic), aromatic, araliphatic and it can be linear or branched. Preferably, the group attached to the epoxy group is selected from C4 to C24 aliphatic groups and substituted or non-substituted phenyl groups. Very preferably, the group is selected from saturated C6 to C18 aliphatic groups, like a C8 to C16 alkyl group.

Suitable examples for epoxidized olefins are 1,2-hexene oxide, 1 ,2-octene oxide, 1,2-nonene oxide, 1,2-undecene oxide, 1,2-dodecene oxide, 1,2-octadecene oxide, 4-methyl-1,2-pentene oxide, 1,2-butene oxide, styrene oxide, butadiene monoxide, isoprene monoxide, cyclopentene oxide, and 2-ethyl-1,2-butene oxide.

Preferably, the organic group of R² and R³ is a hydrocarbyl group or an organic group comprising an ether group or an ester group. Due to the ring opening of the oxirane group during the reaction of the polyethylenimine with the epoxide, one of R² or R³ is a hydrogen atom.

If the nitrogen atom of structure (I) is a secondary amine, R¹ is hydrogen. Secondary amines may undergo further modification with a compound having at least one epoxide group. In that case, the reaction process leads to the conversion of a secondary amine to a tertiary amine wherein R¹ is

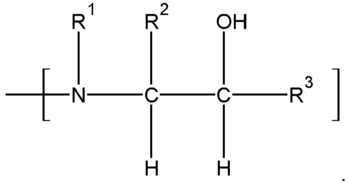

Additionally, polyethyleneimine may comprise non-terminal secondary amine groups. If such groups react with epoxide groups, polyethyleneimine of structure (I) wherein R¹ is part of the polyethyleneimine is formed. That means, that R¹ comprises at least one repeating unit comprising one nitrogen atom and two CH2 groups.

Generally, the component B is the reaction product of a polyethyleneimine with at least one compound having at least one epoxide group. Preferably, component B is the reaction product of a polyethyleneimine with at least one compound having one epoxide group.

In a preferred embodiment, component B is the reaction product of polyethyleneimine with at least one compound having at least one epoxide group in which the molar ratio of total amine groups of the polyethylene imine and epoxide groups from the compound having at least one epoxide group is between 100.0 : 30.0 and 100.0 : 0.3, preferably between 100.0 : 20.0 and 100.0 : 1.0, more preferably between 100.0 : 15.0 and 100.0 : 2.0, and most preferably between 100.0 : 13.0 and 100.0 : 3.0, such as between 100.0 : 10.0 and 100.0 : 4.0.

In another preferred embodiment, component B is the reaction product of polyethyleneimine with at least one compound having at least one epoxide group in which the molar ratio of primary amine groups of the polyethylene imine and epoxide groups from the compound having at least one epoxide group is between 100.0 : 80.0 and 100.0 : 1.0, preferably between 100.0 : 50.0 and 100.0 : 3.0, more preferably between 100.0 : 40.0 and 100.0 : 6.0, and most preferably between 100.0 : 35.0 and 100.0 : 8.0, such as between 100.0 : 30.0 and 100.0 : 10.0.

Before reaction with the epoxide compound, the polyethyleneimine suitably has as weight average molecular weight Mw in the range of 45000 to 250000 g/mol, more preferably 50000 to 200000 g/mol. The number average molecular weight suitably is on the range of Mn 20000 to 50000 g/mol, preferably 25000 to 40000 g/mol.

The number average molecular weight Mn and the weight average molecular weight Mw can be determined by gel permeation chromatography (GPC) according to DIN 55672 part 3 [2016-03] (columns used: combination of two PSS- Novema columns ex Polymer Standard Service, Mainz/Germany; dimensions: 300 mm * 8 mm inner diameter per column, particle size: 10 µm; pore size: first column 3000 Å, second column 300 Å). 0.3 m formic acid in water (13.81 g / L) was used as the eluent with a flow of 1 mL / minute at 30 °C. Calibration was achieved with a series of unbranched Pullulan standards of narrow molar mass with molecular weights between M_{P} 700,000 and M_{P} 342.

Suitably, the composition comprises 0.1 to 100.0 % by weight of component (B), more suitably 0.2 to 40.0 % by weight, even more suitably 0.3 to 30.0 % by weight, and most suitably 0.5 to 10.0 % by weight, calculated on the weight of component (A).

Component (B) may suitably be present as a salt formed with an acid selected from at least one of a carboxylic acid, optionally having at least one ether group, phosphoric acid, phosphonic acid or sulfonic acid. It is preferred that the salt formation is carried out using one or more acids comprising one group selected from carboxylic acid, phosphoric acid, phosphonic acid or sulfonic acid in the molecule.

In a preferred embodiment, component (B) comprises salt groups formed by salt formation of amine groups present in the modified polyethylenimine with one or more acids. The molar ratio of amine groups of the modified polyethylenimine and acid groups of the acid is in the range of 100 : 0 to 100 : 30, preferably 100 : 0 to 100 : 25, more preferably 100 : 0 to 100 : 20, even more preferably 100 : 0 to 100 : 15, most preferably 100 : 0 to 100 : 10.

The acid selected from at least one of a carboxylic acid having at least one ether group, phosphoric acid, phosphonic acid or sulfonic acid may comprise repeating units, such as ether repeating units, and may have a molecular weight distribution.

In a preferred embodiment, the acid is represented by the formula (II) below.

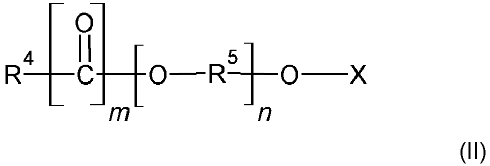

In formula (II), R⁴ is a linear or branched, saturated or mono-unsaturated or poly- unsaturated hydrocarbyl group with 1 to 40 C atoms, R⁵ is an alkylene group or arylalkylene group with 2 to 20, preferably 2 to 9 C atoms, optionally substituted by one ether group. R⁵ may be the same or different in the n repeating units.

X is an organic group which comprises at least one acid group which is selected from carboxylic acid groups, sulfonic acid groups, phosphonic acid groups and phosphoric acid groups, m=0 or 1, n=0 to 30. Preferably, n = 0 to 15, more preferably 1 to 12.

R⁴ is advantageously an alkyl group or alkenyl group with 4 to 24 C atoms. It is preferable if R⁴ is an alkyl group or alkenyl group with 6 to 20 C atoms and m=0. Particularly preferably, R⁴ is an alkyl group or alkenyl group with 8 to 20 C atoms and most particularly preferably an alkyl group with 10 to 18 C atoms, wherein in each case m=0.

In a further embodiment, R⁴ is derived from tall oil fatty acid and m=1.

R⁵ is advantageously an alkylene group with 2 to 4 C atoms. Further preferred embodiments for R⁵ may be described as follows:
R⁵ represents an alkylene group -CH2CH2- and/or -CH2-CH(CH3)-.
R⁵ represents an alkylene group with 2 to 4 C atoms, wherein the molar ratio of repeating units where R2 is -CH2CH2- (relative to the totality of R⁵ containing n units) is at least 40%, preferably at least 50%, particularly preferably at least 70%.

In a particularly preferred embodiment, R⁵ represents in all n repeating units a group - CH2-CH2-.

The group X advantageously comprises carboxylic acid groups. Furthermore, it is preferred if only one acid group is present in the group X.

Preferably, the acid is an alkylethercarboxylic acid.

Preferably, component (B) is provided as a solution in a high boiling solvent. Preferably, the solution is a liquid at 23°C and atmospheric pressure.

The term liquid refers to any liquid medium, independent of its viscosity. Liquids therefore encompass very low viscous media as well as high viscous media, such as paste materials. The high boiling solvent generally has a boiling point of at least 250°C at 100 kPa. In some embodiments, the high boiling solvent has a boiling point which is higher than the decomposition temperature of the solvent.

Preferably, the solution of component B comprises 0 to 99 % by weight of the high boiling solvent, more preferably 20 to 98 % by weight, even more preferably 30 to 97 % by weight, 40 to 96 % or 50 to 95 % by weight, and most preferably 70 to 94 % by weight, calculated on the sum of the weight of component B and the high boiling solvent.

Examples of suitable high boiling solvents are polyethers such as polymers of ethylene oxide and/or propylene oxide, optionally as copolymers obtained by copolymerization with other monoepoxides. They can be mono-, di-, or polyhydroxy functional. Suitable polyethers are for example polyethylene glycol (PEG), polyethylene glycol monoalkylethers (with an alkyl group having 1 to 16 carbon atoms, preferably 1 to 8 carbon atoms, more preferably 1 to 4 carbon atoms) such as polyethylene glycol monomethylether, polypropylene glycol (PPG), polypropylene glycol monoalkylethers (with an alkyl group having 1 to 16 carbon atoms, preferably 1 to 8 carbon atoms, more preferably 1 to 4 carbon atoms), and copolymers of ethylene oxide and propylene oxide having a random, diblock, triblock, or gradient distribution of monomer units.

It is preferred that these polyethers comprise at least 50 mol %, preferably at least 70 mol %, more preferably at least 80 mol %, even more preferably at least 90 mol % of ethylene oxide based repeating units. In a special embodiment, the polyether comprises ethylene oxide based repeating units only.

Preferably, the molecular weight of the polyether is between 150 g/mol and 1000 g/mol, more preferably between 180 g/mol and 800 g/mol. In one embodiment, the molecular weight of the polyether is between about 200 and 500 g/mol.

Preferably, these polyethers are selected from such polyethers which are liquid at room temperature.

The composition according to the present invention may be used in a preparation.

Preferably, the preparation is liquid. Suitably, the preparation comprises a binder. The binder suitably comprises at least one of alkyd resins (such as short, medium, or long oil alkyd), unsaturated polyester resins, vinylester resins, acrylate resins, epoxy resins, polyurethane resins, polyaspartic resins, and silyl modified polymers.

Silyl modified polymers (SMPs, sometimes also referred to as "silyl terminated polymers" or STPs) are prepolymers comprising alkoxy silyl groups. Often, the backbone of these prepolymers comprises polyethers or polyesters. The alkoxy silyl groups can be in terminal positions or lateral positions of the polymer molecule, or a combination of both. When exposed to moisture, the alkoxy silyl groups undergo a condensation reaction forming Si-O-Si groups which leads to a curing of these prepolymers.

It is known to somebody skilled in the art that some of these resin types exist as 1 pack or 2 pack systems. For epoxy, polyurethane, and polyaspartics based systems, 2 pack systems are preferred.The preparation may suitably comprise 0.1 to 10.0 % by weight of the composition according to the invention, more suitably 0.2 to 7.5 % by weight, even more suitably 0.4 to 6.0 % by weight and most suitably 0.6 to 5.0 % by weight, such as 0.7 to 4.5 % by weight, calculated on the total weight of the composition.

The invention also relates to a kit of parts comprising at least one binder module and at least one crosslinking module, wherein at least one of the modules comprises a silicate (A) and a polyethylenimine (B), modified by reaction with an epoxide compound, comprising the structure (I) 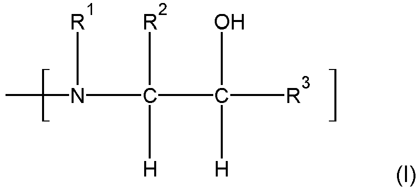 wherein R¹ is H, 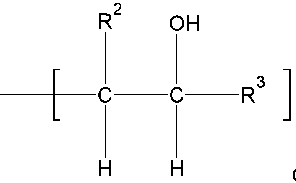 or part of the polyethylenimine, and, and wherein R² is H or an organic group, R³ is H or an organic group, with the proviso that one of R² or R³ is H and wherein the polyethyleneimine has a weight average molecular weight M_{W} in the range of 40000 to 300000 g/mol before the reaction with the epoxide compound.

Suitable examples for the at least one binder module are epoxy resins, polyol components (as used for polyurethane systems), and polyamine components (as used for polyaspartics systems). Suitable examples for the at least one crosslinking module are epoxide hardeners and polyisocyanates.

Suitable polyols used for the binder module are all polyhydroxy-functional compounds which comprise at least two hydroxyl groups. Particularly suitable polyols are polyester polyols, poly(meth)acrylate polyols and polyether polyols, although monomeric polyols with molecular uniformity can also be used. Polyesterpolyols can be obtained by reaction of polycarboxylic acids and their reactive derivatives such as their anhydrides and halides with an excess of preferably monomeric polyols. Examples of monomeric polyols are ethylene glycol, diethylene glycol, triethylene glycol, dipropylene glycol, butanediol, glycerol, trimethylolpropane, pentaerythritol, and the like. Dicarboxylic acids used are frequently adipic acid and phthalic acids, including hydrogenated phthalic acids, and also their anhydrides. Polyester polyols are also obtainable, however, by ring- opening polymerization of lactones with preferably monomeric polyols. Examples of suitable lactones are butyrolactone, caprolactone, and valerolactone. Polyether polyols are obtained preferably by addition reaction of alkylene oxides, preferably ethylene oxide and/or propylene oxide with preferably monomeric polyols. Poly(meth)acrylate polyols are obtained preferably by copolymerization of hydroxy functional (meth)acrylates or (meth)acrylamides with further ethylenically- unsaturated monomers. In principle for the purposes of the present invention, it is possible as well to use all polyols obtainable via the aforementioned methods.

Epoxide hardeners used as crosslinking module are typically di- or polyfunctional compounds or polymers, the functional groups of which are apt to react with oxirane groups. Preferably, the epoxide hardeners which are suitable in the present invention are selected from the group consisting of diamines and polyamines (preferably aliphatic and cycloaliphatic and aromatic diamines and polyamines), amine functional heterocycles (like aminoalkylpiperazines), phenalkamines, and polyamides such as polyaminoamides (preferably of oligomerized fatty acids). Particularly preferred are diamines, polyamines and polyamides as well as their combination. Even more preferred as epoxide hardeners are diamines and polyamines.

Particularly preferred diamines and polyamines can be selected from the group of aliphatic diamines and aliphatic polyamines, like diethylene triamine, triethylene tetramine or 3,3',5-trimethylhexamethylene diamine; cycloaliphatic amines, like 1,2- cyclohexyl diamine, isophorone diamine and its mixture of isomers or m- xylylene diamine; aromatic amines, like methylene dianiline or 4,4-diamino diphenyl sulfone; modified amines, like Mannich bases (e. g. diethylene triamine-phenol-Mannich base). Particularly preferred hardeners of the polyamide type are polyaminoamides and dicyan diamide. Typical representatives of cyclic carboxylic acid anhydride type hardeners being used in thermoset epoxy resins are e. g. phthalic anhydride or hexahydrophthalic anhydride.

Isocyanates used as crosslinking module are such which can cure by forming urethane bonds when reacted with alcohols, but also by forming urea bonds when reacted with amines. Moreover, a crosslinking can also proceed under the reaction of the isocyanate groups amongst each other.

Suitable polyisocyanates are all species having two or more isocyanate groups. In principle it is possible to subdivide the poly-isocyanates into aromatic polyisocyanates, more particularly aromatic diisocyanates such as, for example, 2,4- and 2,6-tolylenediisocyanate (TDI), 1,5-naphthylenediisocyanate, 1,3- and 1,4-phenylene-diisocyanate, 4,4'-diphenyldimethylmethanediisocyanate, 4,4'-diphenylethanediisocyanate, or 2,2'-, 2,4'- and 4,4-diphenyl-methanediisocyanate (MDI) or other di- and tetraalkyl-diphenylmethanediisocyanates; cycloaliphatic poly-isocyanates, more particularly cycloaliphatic diisocyanates such as, for example, 2,2'-, 2,4'- and 4,4'-dicyclohexyl-methanediisocyanate (H₁₂MDI), isophoronediisocyanate (IPDI), cyclohexane 1,4-diisocyanate, or 2,4- and 2,6-methylcyclohexyldiisocyanate (HTDI); araliphatic polyisocyanates, more particularly araliphatic diisocyanates such as, for example, xylylene-diisocyanate (XDI), bisisocyanatoethyl phthalate, or m- and p-tetramethylxylylenediisocyanate (TMXDI); and aliphatic polyisocyanates, more particularly aliphatic diisocyanates such as, for example, hexamethylene-diisocyanate (HDI), ethylenediisocyanate, tetra-methylenediisocyanate, dodecane 1,12-diisocyanate, dimer fatty acid diisocyanate, tetramethoxybutane 1,4-diisocyanate or 2,2,4- and 2,4,4-trimethyl-hexamethylenediisocyanate (TMDI). The polyisocyanates of the abovementioned groups may also be halogen-containing such as chlorine-, bromine- or fluorine-containing, or phosphorus-containing. Examples of such polyisocyanates are 4,4'- diisocyanato-phenylperfluoroethane, 1-chloromethylphenyl-2,4-diisocyanate, 1- bromomethylphenyl-2,6-diisocyanate or 3,3-bischloromethyl-ether-4,4'- diphenyldiisocyanate. It is also possible, however, to use higher-molecular
oligomers or polymers of the poly- and diisocyanates, or mixtures of polyisocyanates from one or more of the abovementioned groups.

Preferably, the binder module comprises an epoxy resin. Suitable epoxy resins can be formed by reacting reactive phenols, alcohols, acids and/or amines with epichlorohydrin. Alternatively, epoxy resins can be prepared by epoxidation reaction of compounds comprising olefinic double bonds. Preferably the epoxy resins used in the present invention are selected from the group consisting of glycidyl ethers, like bisphenol A diglycidyl ether, bisphenol F diglycidyl ether, hydrogenated bisphenol A diglycidyl ether, hydrogenated bisphenol F diglycidyl ether, oligomeric and polymeric diglycidylethers based on bisphenol A and/or Bisphenol F and/or hydrogenated bisphenol A and/or hydrogenated Bisphenol F, epoxide novolak, epoxide o-cresol novolak, epoxydized polybutadiene, epoxydized vegetable oils (like epoxydized soy bean oil or linseed oil), (co)polymers of ethylenically unsaturated monomers comprising at least one epoxy group (such as glycidyl methacrylate), 1,3-propane-, 1,4-butane- or 1,6- hexane-diglycidyl ether and polyalkylenoxide glycidyl ether; glycidyl esters, like hexahydrophthalic acid diglycidyl ester; glycidyl amines, like diglycidyl aniline or tetraglycidylmethylene dianiline; cycloaliphatic epoxides, like 3,4-epoxycyclohexyl-epoxyethane or 3,4-epoxycyclohexylmethyl-3,4-epoxy-cyclohexane carboxylate; and glycidyl isocyanurates, like trisglycidyl isocyanurate. Further epoxy resins which may be used are for example described in EP 2 085426 A1, EP 1 141 071 A1, US 5212261 A, US 3391113 A, or US 4623701. Preferred examples of epoxy resins are those based on bisphenol A, bisphenol F, or cycloaliphatic diols and epichlorohydrin, having a molecular weight between 300 and 5000 g/mol; therefore, liquid as well as solid epoxy resins can be used in preferred embodiments. Epoxy resins can also be chemically modified, e.g., by esterification of OH groups with carboxylic acids (like fatty acids). Preferably for use as baking enamels, epoxy resins can also be combined with other kinds of resins such as phenolic, melamine, urea and benzoguanamin resins.

Preferably, the binder module comprises the silicate (A) and the crosslinking module comprises component (B). In a different embodiment, the binder module comprises component (B) and the crosslinking module comprises the silicate (A).

In yet another embodiment, either the binder module or the crosslinking module comprise both the silicate (A) and the component (B).

The silicate (A) is suitably a solid. The component (B) may generally be a liquid. Component (B) may additionally be dissolved in an appropriate organic diluent.

The silicate (A) and the component (B) may suitably be added to the preparation or the modules, either simultaneously or subsequently. In one preferred embodiment, the silicate (A) and the component (B) are mixed prior to their addition to the preparation or the modules. The mixing process can be provided by any mixing equipment known in the state of the art, such as all kind of stirrers, mills, or extruders. In a different embodiment, the component (B) may be premixed with an adsorbing agent, which is different from the silicate (A), prior to the mixture of the component (B) with the silicate (A).

Generally, the composition may be used as rheology control agent in a non- aqueous preparation. Generally, the non-aqueous preparation is essentially free from water. That denotes a preparation suitably comprising between 0.0 and less than 15.0 %, preferably less than 10.0 % by weight of water, more preferably between 0.0 and 7.0 % by weight of water, calculated on the total weight of the non-aqueous preparation. More preferably, the non-aqueous preparation comprises less than 5.0 % by weight of water. For example, the non-aqueous preparation comprises less than 3.0 % by weight or less than 1.0% by weight of water, calculated on the total weight of the non-aqueous preparation.

Examples of suitable non-aqueous preparations are: a coating composition, a plastic formulation, a pigment paste, a polymer formulation, a sealant formulation, a cosmetic formulation, a homecare or industrial care formulation (including perfume and fragrance formulations), a ceramic formulation, a flooring formulation, an adhesive formulation, a liquid formulation for use in gas and oil production, a composition for the manufacture of electrical components and circuits, a liquid formulation for use in energy storage media, a cleaning agent, a potting compound, a building material formulation, a lubricant, a filling compound, a wax emulsion, a metalworking fluid, a metal-processing product, a liquid composition in the form of a spraying agent, a so-called deposition aid (e.g., for use in plant protection agents or for the general purpose of drift reduction), an ink, and mixtures thereof.

Further preparations wherein the composition according to the present invention can be used are solvent-based or solvent-free paints (such as marine and protective coatings, automotive coatings, general industrial coatings, can and coil coatings, powder coatings), printing inks and inks and lacquers as e.g. lacquers for varnishing of plastics, wire enamels, floor coatings, coating compositions for coating foodstuffs and seeds, and as so-called color resists, which are used for color filters, for example in flat panel displays such as liquid-crystal displays. The field of application lacquers also includes pasty materials which generally have a very high proportion of solids and a small proportion of liquid components, for example so-called pigment pastes or also pastes based on effect pigments, for example metal effect pigments such as, for example, aluminum pigments, silver pigments, brass pigments, zinc pigments, copper pigments, bronze pigments such as gold bronzes, fire-dyed bronzes or iron oxide aluminum pigments. The effect pigments also include, for example, interference pigments or pearlescent pigments such as, for example, metal oxide mica pigments, fishsilver, bismuth oxide chloride or basic lead carbonate.

The plastic preparations can be liquid or non-liquid starting materials to produce plastic materials, which are preferably converted into a duromer (thermoset) by a chemical crosslinking process ("curing").

The cosmetic preparations can be various preparations, which are used in the so called personal care or healthcare sector, e.g. lotions, creams, pastes such as, for example, toothpaste, foams such as, for example, shaving foam, gels such as, for example, shaving gels, shower gels or active ingredients in gel formulations, hair shampoos, liquid soaps, nail varnishes, lipsticks and hair dyes. The so-called wax emulsions are preferably dispersions of solid waxes in particulate form at room temperature in an organic medium. The building material formulations may be liquid or paste-like materials, which are used in the construction sector and solidify after curing. The metal working fluids may be cutting liquids, drilling fluids (such as are used in metal processing), or forging fluids or lubricants in general. Potential other areas are release agents (for example, aluminum die casting and foundry applications), foundry washes (foundry coatings) and liquids for the surface treatment of metals.

The lubricants are means, which are used for lubrication, that is to say, which serve to reduce friction and wear, as well as to provide power, cooling, vibration dampening, sealing action and corrosion protection. Cleaning agents can be used to clean a wide range of objects, for example in the area of homecare or industrial care. They effect or assist the removal of impurities, residues and attachments. The cleaners also include detergents (primarily for cleaning textiles, their precursors, leather, and dish), and personal care products. Formulations containing perfumes and other fragrances (either as liquid raw materials or in encapsulated form), e.g., as perfume gels, also belong to this area of application.

The adhesives can be all adhesive materials which are liquid under processing conditions and which can join parts by surface adhesion and internal strength. The sealants (including caulks) can be all materials which are liquid under processing conditions and which can work as a mechanical seal, preferably to block the passage of fluids, gases, or particles (e.g., dust), as well as the transmission of sound and/or temperature through surface, joints or openings in materials.

Preparations used for gas and oil production are formulations used to develop and exploit a deposit. Drilling fluids or "drilling muds" are preferred examples. Another application example are liquids used to prepare or perform a hydraulic fracturing process.

The non-aqueous preparations of the invention may further comprise customary additives. Examples of additives are antiblocking agents, stabilizers, antioxidants, pigments, wetting agents, dispersants, emulsifiers, additional rheology additives, UV absorbers, free-radical scavengers, slip additives, defoamers, adhesion promoters, leveling agents, waxes, nanoparticles, film-forming auxiliaries, and flame retardants. Preferred additives are wetting agents, dispersants and/or emulsifiers and rheology additives, which are different from the composition of the present invention.

Preferred examples of non-aqueous preparations are coating or paint preparations, thermoset preparations as well as sealants or adhesives preparations.

The non-aqueous preparation may suitably comprise
0.100 to 17.000 % by weight of the silicate (A)
0.001 to 17.000 % by weight of component (B)
66.000 to 99.890 % by weight of binder,
calculated on the sum of the weight of components (A), (B) and binder. The binder encompasses a resin used, as well as all components able to form covalent bonds with the resin, such as hardeners and reactive diluents.

Preferably, the non-aqueous preparation may comprise
0.200 to 14.000 % by weight of the silicate (A)
0.004 to 10.000 % by weight of component (B)
72.000 to 99.790 % by weight of binder,
calculated on the sum of the weight of components (A), (B) and binder.

More preferably, the non-aqueous preparation may comprise
0.300 to 12.000 % by weight of the silicate (A)
0.009 to 5.200 % by weight of component (B)
76.000 to 99.690 % by weight of binder,
calculated on the sum of the weight of components (A), (B) and binder.

In a further aspect, the invention relates to a process comprising the steps of
- providing a three-dimensional article having a surface
- applying a preparation wherein the preparation comprises at least one binder, optionally at least one crosslinking agent, a silicate (A) and a polyethylenimine (B), modified by reaction with an epoxide compound, comprising the structure (I)

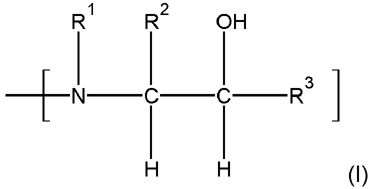

wherein R¹ is H, 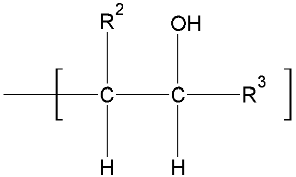 or part of the polyethylenimine, and
wherein R² is H or an organic group, R³ is H or an organic group, with the proviso that one of R² or R³ is H and wherein the polyethyleneimine has a weight average molecular weight M_{W} in the range of 40000 to 300000 g/mol before the reaction with the epoxide compound,
to at least a part of the surface and optionally curing the preparation.

Preferred preparations are the ones mentioned above.

Suitable three-dimensional articles are all three-dimensional objects, irrespective of their size and volume and whether they are mobile or immobile. Illustrative, but not limiting examples are building interiors and exteriors, flooring, furniture, vehicles used for transportation (like automobiles, bikes, boats, aircrafts, agricultural machines, and all kinds of freight vehicles) and construction parts of those vehicles, bridges and tunnels, machinery and production equipment, electrical devices, cans, metal coils, wires, containers, household articles and hardware, pulp and paper, as well as all kind of articles made of wood, metal, plastics or glass (e.g., for functional or ornamental use). In this case, the preparation may toughen or harden after it has been applied to said article. Hardening means converting the preparation into a solid state. This can be achieved by evaporation of liquid diluents (physical drying) or by chemical crosslinking reaction (curing), and by combinations thereof.

The invention further deals with a three-dimensional article comprising a preparation, wherein the preparation comprises at least one binder, optionally at least one crosslinking agent, a silicate (A) and a polyethylenimine (B), modified by reaction with an epoxide compound, comprising the structure (I) 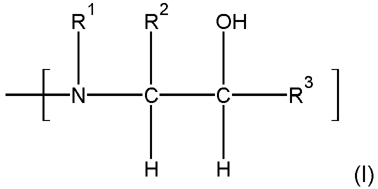 wherein R¹ is H, 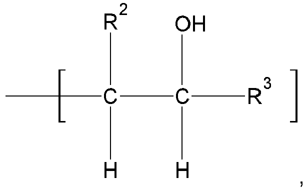 or part of the polyethylenimine, and wherein R² is H or an organic group, R³ is H or an organic group, with the proviso that one of R² or R³ is H and wherein the polyethyleneimine has a weight average molecular weight M_{W} in the range of 40000 to 300000 g/mol before the reaction with the epoxide compound.

### Experimental Part

### Synthesis examples

**Table 1: Raw materials**

| *Name* | *Chemical description* |
|---|---|
| Polyamine A | Polyethyleneimine, Mn= 33212, Mw= 196844 |
| Polyamine B | Polyethyleneimine, Mn= 31155, Mw= 65421 |
| Polyamine C | Polyethyleneimine, Mn= 33832, Mw= 92607 |
| Polyamine D | Polyethyleneimine, Mₙ= 6326, M_{w}= 8714 |
| Polyamine E | Polyethyleneimine, Mₙ= 15038, M_{w}= 19124 |
| MPEG 350 | Methoxypolyethyleneglycol, molecular weight 350 g/mol |
| Glycidylether A | linear C13/C15-alkyl glycidyl ether |
| Acid A | Alkylethercarboxylic acid, C12/C14-based, 2.5 repeating units of ethylene oxide; available via reaction of the ethoxylated alcohol with chloroacetic acid |

Mn and M_{W} of the polyethyleneimines were measured via GPC according to the method describe above.

### Synthesis of modifying agents according to the invention

### IS 1

Polyamine A (50 wt.% solution in water, 110.3 g) and MPEG 350 (630 g) were combined. The mixture was heated under stirring to 105 °C. Vacuum was applied and all water was distilled off. The resulting material was cooled to 55 °C and Glycidylether A (14.84 g) was added. The mixture was stirred at 100 °C for 2 h.

### IS 2

Polyamine A (50 wt.% solution in water, 70 g) and MPEG 350 (630 g) were combined. The mixture was heated under stirring to 105 °C. Vacuum was applied and all water was distilled off. The resulting material was cooled to 55 °C and Glycidylether A (17.5 g) and Acid A (17.5 g) were added subsequently. The mixture was stirred at 100 °C for 2 h.

### IS3

Polyamine B (56 wt.% solution in water, 21.11 g) and MPEG 350 (135.0 g) were combined. The mixture was heated under stirring to 105 °C. Vacuum was applied and all water was distilled off. The resulting material was cooled to 55 °C and Glycidylether A (3.18 g) was added. The mixture was stirred at 100 °C for 2 h.

### IS4

Polyamine C (25 wt.% solution in water, 47.28 g) and MPEG 350 (135.0 g) were combined. The mixture was heated under stirring to 105 °C. Vacuum was applied and all water was distilled off. The resulting material was cooled to 55 °C and Glycidylether A (3.18 g) was added. The mixture was stirred at 100 °C for 2 h.

### IS5

Polyamine A (50 wt.% solution in water, 13.3 g) and MPEG 350 (84.0 g) were combined. The mixture was heated under stirring to 105 °C. Vacuum was applied and all water was distilled off. The resulting material was cooled to 55 °C and 2- Ethylhexylglycidylether (2.69 g) was added. The mixture was stirred at 100 °C for 2 h.

### Synthesis of comparative modifying agents

### NS 2

Polyamine A (50 wt.% solution in water, 200 g) and benzyl alcohol (300 g) were combined. The mixture was heated under stirring to 105 °C. Vacuum was applied and all water was distilled off. The resulting material was cooled to 55 °C and tall oil fatty acid (100 g) was added. The mixture was homogenized.

24.8 g of the material obtained were diluted with benzyl alcohol (74.4 g) and homogenized.

### NS 3

Polyamine A (50 wt.% solution in water, 30 g) and MPEG 350 (135 g) were combined. The mixture was heated under stirring to 105 °C. Vacuum was applied and all water was distilled off.

### NS 4

Polyamine D (10.95 g) and MPEG 350 (125.14 g) were combined. The mixture was heated under stirring to 105 °C. Vacuum was applied and all water was distilled of. The resulting material was cooled to 55°C and Glycidylether A (14.84 g) was added. The mixture was stirred at 100 °C for 2 h.

### NS 5

Polyamine E (21.91 g) and MPEG 350 (125.14 g) were combined. The mixture was heated under stirring to 105 °C. Vacuum was applied and all water was distilled off. The resulting mixture was cooled to 55 °C and Glycidylether A (2.94 g) was added. The mixture was stirred at 100 °C for 2 h.

All inventive and comparative modifying agents mentioned above contain 10% by weight of modified or unmodified polyamine after completion of the synthesis.

### Application examples and testing

**Table 2: Raw materials**

| *Product name* | *Description* | *Supplier* |
|---|---|---|
| Aerosil 200 | Hydrophilic fumed silica | Evonik |
| Aerosil R202 | Hydrophobic fumed silica | Evonik |
| Bayferrox 130BM | Iron oxide red pigment | Lanxess |
| Bayferrox Rot 130M | Iron oxide red pigment | Lanxess |
| Bayferrox 130M | Iron oxide red pigment | Lanxess |
| Bayferrox 303 T | Iron oxide black | Lanxess |
| Bayferrox 3920 | Iron Oxide yellow pigment | Lanxess |
| Borchi Nox M2 | Butanone Oxime | OMG Borchers GmbH |
| Butanox M50 | Methyl ethyl keton peroxide | Akzo Nobel |
| BYK-054 | Solution of foam destroying polymers, silicone-free | BYK-Chemie GmbH |
| BYK-306 | Solution of polyether-modified polydimethylsiloxane | BYK-Chemie GmbH |
| BYK-A 530 | Solution of foam-destroying polymers and polysiloxane | BYK-Chemie GmbH |
| BYK-A 555 | Solution of foam destroying polymers, silicone-free | BYK-Chemie GmbH |
| BYK-1790 | Mixture of foam-destroying polymers | BYK-Chemie GmbH |
| BYKANOL-A | Solution of an alkylol ammonium salt of acidic phosphoric acid esters and an oxime | BYK-Chemie GmbH |
| Cardiolite LITE 2001 LV | Phenalkamine Curing agent | Cardolite Specialty Chemicals Europe NV |
| Chromoxide Green GN M | synthetic chromium oxide green | Lanxess |
| Octa-Soligen Cobalt 10 | Cobalt drier | OMG Borchers GmbH |
| Desmodur N 3390 BA | Aliphatic polyisocyanate HDI-trimer | Covestro |
| Desmodur N 3600 | aliphatic polyisocyanate (low viscous HDI trimer) | Covestro |
| Desmophen NH 1520 | aminofunctional co-reactant for polyisocyanates | Covestro |
| Desmophen NH 1420 | aminofunctional co-reactant for polyisocyanates | Covestro |
| Palatinol N | Diisononyl phthalate | BASF |
| DISPERBYK-108 | Hydroxy-functional carboxylic acid ester with pigment-affinic groups | BYK-Chemie GmbH |
| DISPERBYK-110 | Solution of a copolymer with acidic groups | BYK-Chemie GmbH |
| DISBERBYK-142 | Solution of a phosphoric ester salt of a high molecular weight copolymer with pigment-affinic groups | BYK-Chemie GmbH |
| DISPERBYK-2152 | Hyperbranched polyester | BYK-Chemie GmbH |
| Dowanol PM | Propylene glycol mono methyl ether | Dow |
| Epikure 3140 A | Curing Agent - reactive polyamide | Hexion |
| Epikure 3155 | modified polyamide epoxy curing agent based on dimerized fatty acid and polyamines | Hexion |
| Epikote 828 | Bisphenolic A resin | Hexion |
| Epikote 1001X75 | 75% solids solution in xylene based on epichlorohydrin and bisphenol-A | Hexion |
| Epilox P13-20 | reactive diluent for epoxy resins | LEUNA-Harze GmbH |
| EWO | Barium sulfate | Sachtleben |
| Finntalc 15 M | Calcium carbonate | Mondus |
| Finntalc M 65 | Magnesium silicate | Mondo Minerals |
| Garamite 1958 | Organophilic phyllosilicates | BYK-Chemie GmbH |
| Grilonit RV 1812 | 1,6-Hexandiglycidylether | EMS-Griltech |
| Hakuenka CCR S10 | precipitated calcium carbonate | Omya |
| Heucophos CAPP | calcium aluminum polyphosphate silicate hydrate | Heubach |
| Heucophos ZPA | zinc aluminum orthophosphate hydrate | Heubach |
| Incozol 2 | moisture scavenger in polyurethane coatings and sealants | Incorez |
| Kaneka S 303 H | silyl-terminated polyether | Kaneka |
| Kronos 2190 | Titanium dioxide | Kronos |
| Kronos 2310 | Titanium dioxide | Kronos |
| Luzenac 20 M2 | talc/chlorite | Imerys Minerals |
| Macrynal SM 510/60LG | hydroxy functional acrylic resin | Allnex |
| Dowanol PMA MPA | Methoxypropylacetat | Dow |
| NL 49P | Accelerator NL-49P: Cobalt(II) 2-ethylhexanoate. Solution of 1% cobalt in solvent mixture used for curing | Nouryon |
| Nuodex Combi APB | combination drier based on cobalt, calcium and zirconium | Huntsman |
| Omyacarb 5GU | Calcium Carbonate | Omya |
| Palatal A 400-01 | unsaturated polyester based on isophthalic acid and standard glycols, dissolved in styrene | Buefa |
| pBQ solution 5% | 5 % by weight solution of p-benzoquinone in styrene | |
| Setal A F 48 TB/X | Medium oil alkyd 55% in white spirit/xylene | Allnex |
| Sylosiv A3 | Molecular sieve powder moisture scavengers for 1K and 2K-Polyurethane systems | Grace |
| Ti-Pure R 960 | Titan dioxide pigment | DuPont |
| TiO₂ RKB-4 | Titan dioxide pigment | |
| Tinuvin 292 | liquid hindered amine light stabilizer | BASF |
| White spirit K30 | hydrocarbon solvent (petroleum-derived clear organic solvent) | Overlack |
| Worleekyd AC 2943 | Acrylated low viscous alkyd resin for high solid primers | Worlee |

### 1. 1 pack silane terminated sealing compound

Production of the 1 pack silane terminated sealing compound using the formulation in Table 3. All raw materials were weight in a PP speedmixer cup and were mixed three times at 2.500 rpm for 30 seconds with the Speedmixer DAC 400.1 FVZ. Samples were stored for 24h at 23°C in the speedmixer cups before testing. To evaluate the rheological behavior the viscosity was measured using the rheometer Anton Paar MCR 102 with a plate-plate system. A small amount of the sealing compound is placed on the rheometer plate using a metal spatula. After trimming excess material is removed by using a paper card. The viscosity measurement starts using the following parameters: Plate: PP25, Gap: 0.5mm, Waiting time before shearing: 10 sec, Pre-shearing: 10 data points á 2 sec at 0.11/s, Shearrate: 0.1 - 100 1/s, Datapoints: 16 in a logarithmic ramp (Start: 10sec, End: 1sec)

**Table 3:**

| Raw material | Weight [g] |
|---|---|
| Kaneka S 303 H | 36.30 |
| DINP | 18.15 |
| Omyacarb 5GU | 21.78 |
| Hakuenka CCR S10 | 21.78 |
| Fumed silica | 1.00 |
| Modifying agent | 30 % by wt. on fumed silica |

Inventive modifying agents IS1, IS2 and comparative NS2 were employed in combination with Aerosil 200, respectively. Furthermore, modifying agents IS1, IS2 and NS2 were tested without addition of silica.

**Table 4: Results**

| Example | Rheology pack | viscosity at 0.16 1/s [Pa*s] |
|---|---|---|
| 1.1 | Aerosil R202 | 722 |
| 1.2 | Aerosil 200 | 1790 |
| 1.3 | none | 297 |
| 1.4 | IS1/Aerosil 200 | 4828 |
| 1.5 | IS2/Aerosil 200 | 5107 |
| 1.6 | NS2/Aerosil 200 | 1186 |
| 1.7 | IS1 only (without fumed silica) | 1357 |
| 1.8 | IS2 only (without fumed silica) | 895 |
| 1.9 | NS2 only (without fumed silica) | 326 |

The results in Table 4 show that samples using the combination of hydrophilic fumed silica and the modifying agents IS1 and IS2 have a higher viscosity compared to samples using hydrophilic or hydrophobic fumed silica without modifying agent and also have a higher viscosity than the sample using the combination of hydrophilic fumed silica and NS2. Samples IS1 only and IS2 only comprising the modifying agent without hydrophilic fumed silica have a higher viscosity compared to the non-inventive sample NS2 only, but not as high as the combination of the inventive modifying agents in combination with hydrophilic fumed silica.

### 2. 1K Short Oil Alkyd-System

In a first step, the components of List 1 (comprising the alkyd binder, cf. Table 5) were homogenized for 2 minutes at a stirring speed of 2 m/s using a dissolver (Getzmann Dispermat LC 30; toothed plate with 4 cm diameter). Afterwards, the components of List 2 were subsequently added while stirring at 2 m/s.

The components of List 3 were added subsequently to the mixture while stirring and dispersing for 20 minutes at 12 m/s.

The components of List 4 were added subsequently to the formulation obtained from List 1, List 2, List 3 and homogenized for 2 minutes at a stirring speed of 2 m/s.

**Table 5:**

| Raw Material | Weight [g] |
|---|---|
| **List 1** | |
| Worleekyd AC2943 | 32.0 |
| DISBERBYK-2152 | 0.5 |
| Xylene | 5.0 |

| **List 2** | |
|---|---|
| Garamite 1958 | 1.0 |
| Xylene | 4.0 |

| **List 3** | |
|---|---|
| Kronos 2310 | 8.0 |
| Bayferrox 303 T | 0.5 |
| EWO | 24.0 |
| Finntalc 15 M | 12.0 |
| Heucophos CAPP | 8.0 |

| **List 4** | |
|---|---|
| Xylene | 3.0 |
| BYKANOLA-A | 0.5 |
| Cobalt 10 | 0.5 |
| Xylene | 1.0 |
| Modifying agent | 15% by weight on Garamite 1958 |

Inventive modifying agents IS1 as well as IS2 were employed in combination with Garamite 1958, respectively. Comparative example 2.1 contained Garamite 1958 only, without modifying agent.

The formulation is stored at room temperature (23°C) for 24 hours. For the sag resistance test the samples were applied with a stepped doctor blade Model 421/S (Erichsen GmbH & Co KG) with 50-500 µm wet film thickness. The application is done on contrast cards 2801 (BYK-Gardner GmbH) using the automatic applicator byko-drive XL (BYK-Gardner GmbH) with an application speed of 50 mm/s. Directly after application, the draw-down is hanged up vertically at room temperature until it is dried. After drying the visual evaluation of the sag resistance is done. Therefore, among the lines of 50 to 500 µm wet film thickness, the wet film thickness is considered that shows after drying a clear separation of the draw down, no runner and also no bulge building between the applied lines of different film thickness.

**Table 6: Results**

| | Rheology pack | Sag resistance [µm] |
|---|---|---|
| 2.1 | Garamite 1958 | 500 |
| 2.2 | IS1/Garamite 1958 | 750 |
| 2.3 | IS2/Garamite 1958 | 800 |

As can be seen from the results in the above table, the sag resistance of the short oil alkyd system could significantly be improved by using an inventive combination of organically modified clay and modifying agent compared to the use of the organically modified clay only.

### 3. 1p Medium Oil Alkyd-System

Production of the medium oil alkyd system using the formulation in table 7 on a CV (VMA Getzmann GmbH). Subsequent 70 g of the formulation were filled in 100 ml glass bottles. Then 10% of the respective modifying agent(calculated on the amount of Garamite 1958) became incorporated with the Dispermat CV (VMA Getzmann GmbH) 2 minutes at 1500 rpm using a 3 cm diameter toothed plate. After that the formulation is stored at room temperature (23°C) over night. For the sag resistance test the samples were applied with a stepped doctor blade Model 421/S (Erichsen GmbH & Co KG) with 50-500 µm wet film thickness. The application is done on contrast cards 2801 (BYK-Gardner GmbH) using the automatic applicator byko-drive XL (BYK-Gardner GmbH) with an application speed of 50mm/s. Directly after application the draw down is hanged up vertical at room temperature until it is dried. After drying the visual evaluation of the sag resistance is done. Therefor the wet film thickness is taken that shows after drying a clear separation of the draw down, no runner and also no bulge building between the applied film thickness. Furthermore the viscosity of the samples was measured on rheometer Physica MCR-301 (Anton-Paar GmbH) with the following parameters: cone-plate system, Cone CP-50-1, Controlled shear rate measurement D= 0.1 - 1000 1/s, at 23 °C. The viscosity value at 0.4 1/s was taken for the characterization of the low shear viscosity of the sample.

**Table 7:**

| Grind | Raw Material | Weight [g] |
|---|---|---|
| | Setal A F 48 TB/X | 18.2 |
| | White spirit K 030 | 8.2 |
| | Xylene | 16.6 |
| | Disperbyk 108 | 0.3 |
| | Kronos 2190 | 25.0 |
| | Garamite 1958 | 2.0 |
| | Modifying Agent | 15% by weight on Garamite 1958 |
| Dispermat CV, 40°C, 30 min., 8500 RPM, 4cm-diameter toothed plate | | |
| Letdown | Setal A F 48 TB/X | 29.7 |
| | Nuodex Combi APB | 1.5 |
| | Borchi Nox M2 | 0.5 |
| Dispermat CV, 40°C, 5 min., 1500 RPM, 4cm-diameter toothed plate | | |

Inventive modifying agents IS1 was employed in combination with Garamite 1958, as well as non-inventive example NS2 which was used in combination with Garamite 1958, too. Non-inventive example 3.2 contained Garamite 1958 only, without modifying agent. Sample 3.1 contained neither modifying agent nor Garamite 1958.

**Table 8: Results**

| | Rheology pack | Sag resistance [µm] | Viscosity [Pas] at 0.4 1/s |
|---|---|---|---|
| 3.1 | none | <50 | 0.08 |
| 3.2 | Garamite 1958 | 100 | 1.80 |
| 3.3 | IS1/Garamite 1958 | 200 | 10.20 |
| 3.4 | NS2/Garamite 1958 | 150 | 8.40 |

From the table 8 it is visible, that the non-inventive example 3.2 that contains only organically modified clay shows a lower sag resistance and a lower viscosity than the inventive sample 3.3. IS1 improves obviously the anti-sagging behavior and the viscosity of the medium oil alkyd system better than non-inventive example NS2.

### 4. 2p Gel Coat

Production of the gel coat using the formulation in table 9 on a Dispermat CV (VMA Getzmann GmbH). Subsequent 100 g of the polyester resin formulation (Table 9, component A) were filled in 150 ml glass bottles. Then 30% of the respective modifying agent (calculated on the amount of Aerosil 200) became incorporated with a Dispermat CV (VMA Getzmann GmbH) 2 minutes at 1500 rpm using a 3 cm diameter toothed plate. After that the mixture is stored at room temperature (23°C) over night. Immediately before the viscosity measurement, the peroxide (Table 9, component B) was incorporated by stirring with spatula. For the viscosity characterization the samples were measured on rheometer Physica MCR-301 (Anton-Paar GmbH) with the following parameters: cone-plate system, Cone CP-50-1, Controlled shear rate measurement D= 0.1 - 1000 1/s, at 23 °C. The viscosity value at 0.4 1/s was taken for the characterization of the low shear viscosity of the sample.

**Table 9:**

| Component | Raw Material | Weight [g] |
|---|---|---|
| A | Palatal A 400-01 | 78.25 |
| | Aerosil 200 | 2.00 |
| | Styrene monomer | 19.75 |
| | pBQ solution 5% | 1.00 |
| | NL 49P | 0.50 |
| | BYK A 555 | 1.00 |
| | Dispermat CV, RT, 5 min, 4800 rpm, 4 cm toothed plate | |
| | Modifying agent | 0.60 |
| | Dispermat CV, RT, 2 min, 1500 rpm, 3 cm toothed plate | |
| B | Butanox M50 | 1.00 |

Inventive modifying agents IS1 and non-inventive NS2 were employed in combination with Aerosil 200, respectively.

**Table 10: Results**

| Example | Rheology pack | Viscosity [Pas] at 0.4 1/s |
|---|---|---|
| 4.1 | none | 0.16 |
| 4.2 | Aerosil 200 | 11.90 |
| 4.3 | IS1/Aerosil 200 | 26.30 |
| 4.4 | NS2/Aerosil 200 | 19.10 |

From the table 10 it is visible, that non-inventive example 4.2 that contains only Aerosil 200 shows a lower viscosity than the sample with the inventive modifying agent IS1. IS1 obviously increases the viscosity of the gel coat better than non-inventive example NS2.

### 5. 2-K Epoxy-Adhesive

Production of the 2 pack Epoxy Adhesive using the formulation in Table 11. Raw materials of component A were weight in a PP Speedmixer cup and were mixed with the Speedmixer DAC 400.1 FVZ 2 times at 2500 rpm for 30 seconds. Raw materials of component B were weight in a PP Speedmixer cup and were mixed with the Speedmixer 2 times at 2500 rpm for 30 seconds. All samples were stored for 24h at 23°C. Afterwards, component B was added to component A and mixed by hand directly before testing.

In addition, samples of component A were stored for 12 months at 23°C. Samples of freshly formulated component B were added to stored component A and mixed by hand directly before testing.

To evaluate the rheological behavior the viscosity was measured using the rheometer Anton Paar MCR 102 with the plate-plate system. A small amount of the epoxy adhesive is placed on the rheometer plate using a metal spatula. After trimming excess material is removed by using a paper card. The viscosity measurement starts using the following parameter: Plate: PP25, Gap: 0.5mm, Shear rate: 0.1 - 1000 1/s, Datapoints: 21 in a linear ramp (Start 10sec, End 2sec).

**Table 11:**

| Component | Raw material | Reference Sample (hydrophobic silica), Weight [g] | Control Sample (hydrophilic silica), Weight [g] | No rheology pack), Weight [g] | Combination sample (hydrophilic silica + modifying agent), [Weight [g] | Modifying agent only sample (no silica), Weight [g] |
|---|---|---|---|---|---|---|
| A | Epikote 828 | 32.50 | 32.50 | 32.50 | 32.50 | 32.50 |
| | Aerosil R 202 | 2.00 | | | | |
| | Aerosil 200 | | 2.00 | | 2.00 | |
| B | Epikure 3140 A | 16.25 | 16.25 | 16.25 | 16.25 | 16.25 |
| | Modifying agent | | | | 0.60 (30 wt % on fumed silica) | 0.60 |

Inventive modifying agents IS1, IS2 and non-inventive NS3 were employed in combination with Aerosil 200 respectively. Non-inventive example 5.2 contained Aerosil 200 only, without modifying agent. For non-inventive example 5.1, Aerosil R202 was employed without modifying agent. Furthermore, IS1 and IS2 were employed without addition of silica (IS1 only, IS2 only). Example 5.3 contained neither modifying agent nor silica.

**Table 12: Results**

| Example | Rheology pack | Initial sample (24 h at 23°C), viscosity at 0.16 1/s[Pa*s] | Stored sample (12 months at 23°C), viscosity at 0.16 1/s [Pa*s] |
|---|---|---|---|
| 5.1 | Aerosil R202 | 262 | 235 |
| 5.2 | Aerosil 200 | 424 | 70 |
| 5.3 | none | 21 | 20 |
| 5.4 | IS1/ Aerosil 200 | 675 | 448 |
| 5.5 | IS2 /Aerosil 200 | 506 | 378 |
| 5.6 | NS3/Aerosil 200 | 465 | 334 |
| 5.7 | IS1 only | 18 | 18 |
| 5.8 | IS2 only | 18 | 18 |

The result in table 12 shows that samples using the combination of inventive modifying agents IS1 and IS2 with hydrophilic fumed have a higher viscosity than all comparative examples. Using the inventive modifying agents IS1 and IS2 without fumed silica has no significant influence on the viscosity.

After a storage time of 12 months at 23°C the sample using hydrophilic fumed silica has a low viscosity, whereas samples using the combination of hydrophilic fumed silica and the inventive modifying agents IS1 and IS2 keep a high viscosity level.

### 6. Conventional 2K Epoxy-System

Preparation of the Epoxy component (component A): The components of List 1 were added in chronological order to the mixing pot and homogenized for 2 min at 2 m/s using a dissolver (Getzmann Dispermat LC 30; toothed plate with 4 cm diameter). After that, components from List 2 were added while stirring and dispersed for 20 min at 12 m/s. Then, components of List 3 were added subsequently while stirring for 2 min at 2 m/s.

Preparation of the hardener component (component B): Epikure 3155 and the organic modifying agent were mixed using a shaker (Fast&Fluid, Model SK 450, frequency: 50/60 Hz; 5 minutes).

**Tabelle 13:**

| Component | Raw Material | Weight [g] |
|---|---|---|
| A | **List 1** | |
| | Epikote 1001X75 | 23.0 |
| | Xylene | 6.0 |
| | Dowanol PM | 5.0 |
| | Garamite 1958 | 1.0 |
| | DISBERBYK-142 | 0.9 |
| | **List 2** | |
| | Bayferrox 130M | 4.7 |
| | Finntalc M 65 | 12.0 |
| | Heucophos ZPA | 20.0 |
| | EWO | 14.0 |
| | BYK-A 530 | 0.5 |
| | **List 3** | |
| | Dowanol PM | 5.2 |
| | Xylene | 7.7 |
| B | Epikure 3155 | 4.6 |
| | Modifying agent | 15% by weight on Garamite 1958 |

Inventive modifying agents IS1 and IS2 as well as non-inventive NS2 were employed in combination with Garamite 1958, respectively. Non-inventive example 6.1 contained Garamite 1958 only, without modifying agent.

Components A and B were separately stored at room temperature (23°C) for 24 hours. Directly before application, components A and B were mixed using an electrical stirrer (Getzmann Dispermat CV, toothed plate: 2 cm diameter) for 2 min at 2 m/s.

For the sag resistance test the samples were applied with a stepped doctor blade Model 421/S (Erichsen GmbH & Co KG) with 50-500 µm wet film thickness. The application is done on contrast cards 2801 (BYK-Gardner GmbH) using the automatic applicator byko-drive XL (BYK-Gardner GmbH) with an application speed of 50 mm/s. Directly after application, the draw-down is hanged up vertically at room temperature until it is dried. After drying the visual evaluation of the sag resistance is done. Therefore, among the lines of 50 to 500 µm wet film thickness, the wet film thickness is considered that shows after drying a clear separation of the draw down, no runner and also no bulge building between the applied lines of different film thickness.

**Table 14: Results**

| | Rheology packs | Sag resistance [µm] |
|---|---|---|
| 6.1 | Garamite 1958 | 150 |
| 6.2 | IS1/Garamite 1958 | 300 |
| 6.3 | IS2/Garamite 1958 | 300 |
| 6.4 | NS2/Garamite 1958 | 150 |

As can be seen from the above table, the sag resistance of the formulation using the organically modified clay only could be significantly increased by using the combinations with the inventive modifying agents IS1 and IS2, whereas no improvement could be achieved when using non-inventive NS2.

### 7. High Solid 2K Epoxy-System

Preparation of the Epoxy component (component A): The components of List 1 were added in chronological order to the mixing pot and homogenized for 2 min at 2 m/s using a dissolver (Getzmann Dispermat LC 30; toothed plate with 4 cm diameter). After that, components from List 2 were added while stirring and dispersed for 20 min at 12 m/s. Then, the component of List 3 was added subsequently while stirring for 2 min at 2 m/s.

Preparation of the hardener component (component B): Epikure 3155 and the organic modifying agent were mixed using a shaker (Fast&Fluid, Model SK 450, frequency: 50/60 Hz; 5 minutes).

**Table 15:**

| Component | Raw Material | Weight [g] |
|---|---|---|
| A | **List 1:** | |
| | Epikote 828 | 23.7 |
| | Xylene | 4.8 |
| | Garamite 1958 | 1.0 |
| | DISBERBYK-2152 | 0.6 |
| | BYK-A 530 | 0.5 |
| | **List 2:** | |
| | Ti-Pure R 960 | 17.5 |
| | Finntalc M65 | 13.2 |
| | EWO | 28.7 |
| | **List 3:** | |
| | Xylene | 10.0 |
| B | Epikure 3155 | 16.9 |
| | Modifying agent | 15% by weight on Garamite 1958 |

Inventive modifying agents IS1 as well as non-inventive NS2 were employed in combination with Garamite 1958, respectively. Non-inventive example 7.1 contained Garamite 1958 only, without modifying agent.

Components A and B are separately stored at room temperature (23°C) for 24 hours. Directly before application, components A and B were mixed using an electrical stirrer (Getzmann Dispermat CV, toothed plate: 2 cm diameter) for 2 min at 2 m/s.

For the sag resistance test the samples were applied with a stepped doctor blade Model 421/S (Erichsen GmbH & Co KG) with 50-500 µm wet film thickness. The application is done on contrast cards 2801 (BYK-Gardner GmbH) using the automatic applicator byko-drive XL (BYK-Gardner GmbH) with an application speed of 50 mm/s. Directly after application, the draw-down is hanged up vertically at room temperature until it is dried. After drying the visual evaluation of the sag resistance is done. Therefore, among the lines of 50 to 500 µm wet film thickness, the wet film thickness is considered that shows after drying a clear separation of the draw down, no runner and also no bulge building between the applied lines of different film thickness.

**Table 16: Results**

| Example | Rheology pack | Sag resistance [µm] |
|---|---|---|
| 7.1 | Garamite 1958 | 200 |
| 7.2 | IS1/Garamite 1958 | 1000 |
| 7.3 | NS2/Garamite 1958 | 500 |

As can be seen from table 16, the sag resistance of the formulation using the organically modified clay only could be significantly increased by using the inventive modifying agent IS1, while only a minor improvement could be achieved when using non-inventive NS2.

### 8. Total solid 2K Epoxy-System

Preparation of the Epoxy component (component A): The components of List 1 were added in chronological order to the mixing pot and homogenized for 2 min at 2 m/s using a dissolver (Getzmann Dispermat LC 30; toothed plate with 4 cm diameter). After that, components from List 2 were added while stirring and dispersed for 20 min at 12 m/s. Then, the component of List 3 was added subsequently while stirring for 2 min at 2 m/s.

Preparation of the hardener component (component B): Epikure 3155 and the organic modifying agent were mixed by using a shaker (Fast&Fluid, Model SK 450, frequency: 50/60 Hz; 5 minutes).

**Table 17:**

| Component | Raw Material | Weight [g] |
|---|---|---|
| A | **List 1:** | |
| | Epikote 828 | 20.0 |
| | Epilox P13-20 | 8.0 |
| | Garamite 1958 | 1.0 |
| | DISBERBYK-2152 | 0.5 |
| | BYK-1790 | 0.5 |
| | **List 2:** | |
| | Bayferrox 130BM | 4.0 |
| | Finntalc M65 | 11.0 |
| | EWO | 35.0 |
| | **List 3:** | |
| | Epikote 828 | 20.0 |
| B | Epikure 3155 | 34.1 |
| | Modifying agent | 15% by weight on Garamite 1958 |

Inventive modifying agents IS1 and IS2 were employed in combination with Garamite 1958, respectively. Non-inventive example 8.1 contained Garamite 1958 only, without modifying agent.

Components A and B are separately stored at room temperature (23°C) for 24 hours. Directly before application, components A and B were mixed using an electrical stirrer (Getzmann Dispermat CV, toothed plate: 2 cm diameter) for 2 min at 2 m/s.

For the sag resistance test the samples were applied with a stepped doctor blade Model 421/S (Erichsen GmbH & Co KG) with 50-500 µm wet film thickness. The application is done on contrast cards 2801 (BYK-Gardner GmbH) using the automatic applicator byko-drive XL (BYK-Gardner GmbH) with an application speed of 50 mm/s. Directly after application, the draw-down is hanged up vertically at room temperature until it is dried. After drying the visual evaluation of the sag resistance is done. Therefore, among the lines of 50 to 500 µm wet film thickness, the wet film thickness is considered that shows after drying a clear separation of the draw down, no runner and also no bulge building between the applied lines of different film thickness.

**Table 18: Results**

| Example | Rheology pack | Sag resistance [µm] |
|---|---|---|
| 8.1 | Garamite 1958 | 250 |
| 8.2 | IS1/Garamite 1958 | 500 |
| 8.3 | IS2/Garamite 1958 | 500 |

As can be seen from the table 18, the sag resistance of the formulation using the organically modified clay only could be significantly increased by using the inventive modifying agents IS1 and IS2, respectively.

### 9. Total solid 2K Epoxy-System

Production of the Solvent free epoxy primer using the formulation in table 19 on Dispermat CV (VMA Getzmann GmbH). Subsequent 70 g of the formulation were filled in 100 ml glass bottles. After the formulation is stored at room temperature (23°C) over night 10% of the respective modifying agent (calculated on the amount of GARAMITE-1958) became incorporated together with the required amount of the hardener into the formulation by stirring with spatula. For the sag resistance test the samples were applied with a stepped doctor blade Model 421/S (Erichsen GmbH & Co KG) with 50-500 and 550-1000 µm wet film thickness. The application is done on contrast cards 2801 (BYK-Gardner GmbH) using the automatic applicator byko-drive XL (BYK-Gardner GmbH) with an application speed of 50mm/s. Directly after application the draw down is hanged up vertical at room temperature until it is dried. After drying the visual evaluation of the sag resistance is done. Therefor the wet film thickness is taken that shows after drying a clear separation of the draw down, no runner and also no bulge building between the applied film thickness.

**Table 19:**

| Component | Raw Material | Weight [g] |
|---|---|---|
| A | Epikote 828 | 40.0 |
| | Grilonit RV 1812 | 8.0 |
| | DISBERBYK-2152 | 0.5 |
| | BYK-1790 | 0.5 |
| | Bayferrox Red 130M | 4.0 |
| | Luzenac 20 M2 | 11.0 |
| | EWO | 36.0 |
| | Garamite 1958 | 1.0 |

| Dispermat CV, 50°C, 30 min, 8500 RPM, 4 cm diameter toothed plate | | |
|---|---|---|
| B | Cardiolite LITE 2001 LV | 33.1 |
| | Modifying agent (10% delivery form on Garamite 1958) | 0.1 |

Inventive modifying agents IS1, IS2, IS3, IS4 and IS5 as well as non-inventive NS2 were employed in combination with Garamite 1958, respectively. Non- inventive example 9.1 contained Garamite 1958 only, without modifying agent. Non-inventive sample 9.2 contained neither Garamite 1958 nor modifying agent.

**Table 20: Results**

| Example | Rheology pack | Sag resistance [µm] |
|---|---|---|
| 9.1 | Garamite 1958 | 250 |
| 9.2 | none | 50 |
| 9.3 | IS1/ Garamite 1958 | >1000 |
| 9.4 | IS2/ Garamite 1958 | 950 |
| 9.5 | IS3/ Garamite 1958 | 950 |
| 9.6 | IS4/ Garamite 1958 | 1000 |
| 9.7 | IS5/ Garamite 1958 | >1000 |
| 9.8 | NS2/ Garamite 1958 | 500 |
| 9.9 | NS4/ Garamite 1958 | 450 |
| 9.10 | NS5/ Garamite 1958 | 500 |

From the table 20 it is visible, that non-inventive 9.1 that contains only Garamite 1958 shows a lower sag resistance than the samples containing the inventive modifying agents IS1-IS5. These samples improve obviously the anti-sagging behavior of the solvent-free epoxy primer much better than NS2.

### 10. 2-pack PU

Production of the 2-pack PU using the formulation in table 21 with Dispermat CV (VMA Getzmann GmbH). Subsequent 70 g of the formulation were filled in 100 ml glass bottles. After the formulation is stored at room temperature (23°C) over night 10% by weight of the respective modifying agent solution (calculated on the amount of GARAMITE-1958) became incorporated together with the required amount of the hardener into the formulation by stirring with spatula. For the sag resistance test the samples were applied with a stepped doctor blade Model 421/S (Erichsen GmbH & Co KG) with 50-500 µm wet film thickness. The application is done on contrast cards 2801 (BYK-Gardner GmbH) using the automatic applicator byko-drive XL (BYK-Gardner GmbH) with an application speed of 50mm/s. Directly after application the draw down is hanged up vertical at room temperature until it is dried. After drying the visual evaluation of the sag resistance is done. Therefor the wet film thickness is taken that shows after drying a clear separation of the draw down, no runner and also no bulge building between the applied film thickness.

**Table 21:**

| Component | Grind | Control sample without Garamite paste, Weight [g] | Samples with Garamite paste, Weight [g] |
|---|---|---|---|
| A | Macrynal SM 510/60LG | 23.5 | 23.5 |
| | Butylacetate | 9.0 | - |
| | Dowanol PMA | 8.0 | - |
| | Disperbyk 110 | 1.2 | 1.2 |
| | TiO₂ RKB-4 | 34.0 | 34.0 |
| | Garamite 1958 paste 10% solid | - | 20.0 |
| | Dispermat CV, 40°C, 8500RPM, 4cm toothed plate, 20min | | |
| | Let-down | | |
| | Macrynal SM 510/60LG | 24.0 | 24.0 |
| | BYK 306 | 0.3 | 0.3 |
| | Dispermat CV, 23°C, 3000RPM, 4cm toothed plate, 5 min. | | |
| B | Hardening | | |
| | Desmodur N 3390 BA | 16.4 | 16.4 |
| | Modifying agent (10% wton Garamite 1958) | - | 0.2 |

**Table 21a:Garamite 1958 paste (10% solid):**

| | |
|---|---|
| Buac / Dowanol PMA = 9:8 | 85.0 g |
| Ethanol / water 95 : 5 | 5.0 g |
| GARAMITE 1958 | 10.0 g |
| Total | 100.0 g |

| | |
|---|---|
| Grinding: Dispermat CV, room temperature, 20 minutes at 8500 rpm, 4 cm diameter toothed plate | |

Inventive modifying agent IS1 as well as non-inventive NS2 were employed in combination with Garamite 1958, respectively. Non-inventive example 10.2 contained Garamite 1958 only, without modifying agent. Non-inventive sample 10.1 contained neither Garamite 1958 nor modifying agent.

**Table 22: Results**

| Example | Rheology pack | Sag resistance [µm] |
|---|---|---|
| 10.1 | none | <50 |
| 10.2 | Garamite 1958 | 100 |
| 10.3 | IS1/ Garamite 1958 | 200 |
| 10.4 | NS2/ Garamite 1958 | 150 |

From the table 22 it is visible, that non-inventive example 10.2 that contains only Garamite 1958 shows a lower sag resistance than the sample with the modifying agent IS1. IS1 improves obviously the anti-sagging behavior of the 2p-PU formulation better than non-inventive sample NS2.

### 11. 2K Polyaspartics-Svstem

Preparation of component A: The components of List 1 were added in chronological order to the mixing pot and homogenized for 2 min at 2 m/s using a dissolver (Getzmann Dispermat LC 30; toothed plate with 4 cm diameter). After that, components from List 2 were added while stirring and dispersed for 20 min at 12 m/s. Then, the component of List 3 was added subsequently while stirring for 2 min at 2 m/s. Finally, the modifying agent (List 4) was added while stirring for 2 min at 2 m/s.

**Table 23:**

| Component | Raw Material | Weight [g] |
|---|---|---|
| A | **List 1:** | |
| | Desmophen NH 1520 | 11.3 |
| | Desmophen NH 1420 | 17.1 |
| | Garamite 1958 | 1.0 |
| | DISBERBYK-2152 | 1.5 |
| | **List 2:** | |
| | Sylosiv A3 | 2.9 |
| | Chromoxide Green GN M | 7.3 |
| | Bayferrox 3920 | 1.3 |
| | Ti-Pure R 960 | 10.6 |
| | EWO | 29.0 |
| | **List 3:** | |
| | BYK-054 | 0.7 |
| | Tinuvin 292 | 0.5 |
| | Incozol 2 | 3.0 |
| | Dowanol PMA | 5.8 |
| | Butylacetate | 8.0 |
| | **List 4:** | |
| | Modifying agent | 15% by weight on Garamite 1958 |
| B | Desmodur N 3600 | 16.8 |

Component A has been stored for 4 weeks at 23°C. Directly before application, components A and B were mixed using an electrical stirrer (Getzmann Dispermat CV, toothed plate: 2 cm diameter) for 2 min at 2 m/s.

For the sag resistance test the samples were applied with a stepped doctor blade Model 421/S (Erichsen GmbH & Co KG) with 50-500 µm wet film thickness. The application is done on contrast cards 2801 (BYK-Gardner GmbH) using the automatic applicator byko-drive XL (BYK-Gardner GmbH) with an application speed of 50 mm/s. Directly after application, the draw-down is hanged up vertically at room temperature until it is dried. After drying the visual evaluation of the sag resistance is done. Therefore, among the lines of 50 to 500 µm wet film thickness, the wet film thickness is considered that shows after drying a clear separation of the draw down, no runner and also no bulge building between the applied lines of different film thickness.

Inventive modifying agents IS1 was employed in combination with Garamite 1958. Non-inventive example 11.1 contained Garamite 1958 only, without modifying agent.

**Table 24: Results**

| Example | Rheology pack | Sag resistance [µm] |
|---|---|---|
| 11.1 | Garamite 1958 | 150 |
| 11.2 | IS1/Garamite 1958 | 300 |

As can be seen from the above table, the sag resistance obtained with organoclay could significantly be improved by using the inventive combination with the modifying agent IS1.

## Claims

1. A use of a composition as rheology control agent comprising
(A) silicate and
(B) a polyethylenimine, modified by reaction with an epoxide compound, comprising the structure (I) 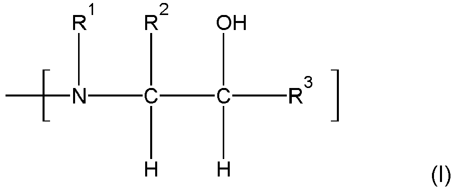
wherein R¹ is H, 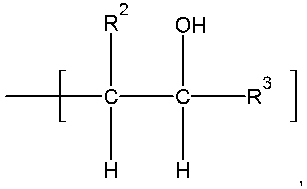 or part of the polyethylenimine, and
wherein R² is H or an organic group, R³ is H or an organic group, with the proviso that one of R² or R³ is H and wherein the polyethyleneimine has a weight average molecular weight Mw in the range of 40000 to 300000 g/mol before the reaction with the epoxide compound, wherein the Mw is determined by gel permeation chromatography (GPC) according to DIN 55672 part 3 (2016-03).

2. The use of the composition according to claim 1, wherein the silicate (A) is selected from clay, silica, and mixtures thereof.

3. The use of the composition according to claim 1 or 2, wherein R² and R³ are independently selected from hydrocarbyl groups, organic groups comprising an ether group, and organic groups comprising an ester group.

4. The use of the composition according to any one of the preceding claims, wherein component (B) is present as a salt with an acid selected from at least one of a carboxylic acid, phosphoric acid, phosphonic acid or sulfonic acid.

5. The use of the composition according to any one of the preceding claims, wherein component (B) is provided as a solution in a high boiling solvent having a boiling point of at least 250 °C at 100 kPa.

6. The use of the composition according to claim 5, wherein the solution is a liquid at 23 °C and at 100 kPa.

7. The use of the composition according to claim 5 or 6, wherein the high boiling solvent comprises a polyether.

8. The use of the composition according to any one of the preceding claims, wherein component B is obtainable by reacting a polyethylenimine with at least one compound having at least one epoxide group.

9. The use of the composition according to any one of the preceding claims in a non-aqueous preparation.

10. The use of the composition according to any one of the preceding claims wherein the composition comprises 0.1 to 100.0 % by weight of component (B), calculated on the weight of component (A).

11. The use of the composition according to any one of the preceding claims in a preparation comprising a binder comprising at least one of alkyd resins, unsaturated polyester resins, vinylester resins, acrylate resins, epoxy resins, polyurethane resins, polyaspartics resins, and silyl modified polymers.

12. The use of the composition according to any one of the preceding claims, wherein the preparation is provided as a kit of parts comprising at least one binder module and at least one crosslinking module.

13. A kit of parts comprising at least one binder module and at least one crosslinking module, wherein at least one of the modules comprises a silicate (A) and a polyethylenimine (B), modified by reaction with an epoxide compound, comprising the structure (I) 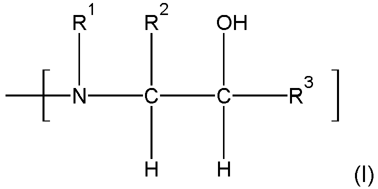 wherein R¹ is H, 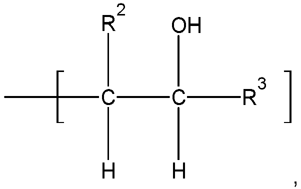 or part of the polyethylenimine, and wherein R² is H or an organic group, R³ is H or an organic group, with the proviso that one of R² or R³ is H and wherein the polyethyleneimine has a weight average molecular weight Mw in the range of 40000 to 300000 g/mol before the reaction with the epoxide compound, wherein the Mw is determined by gel permeation chromatography (GPC) according to DIN 55672 part 3 (2016-03).

14. The kit of parts according to claim 13 wherein the binder module comprises an epoxy resin.

15. A process comprising the steps of
- providing a three-dimensional article having a surface
- applying a preparation wherein the preparation comprises at least one binder, optionally at least one crosslinking agent, a silicate (A) and a polyethylenimine (B), modified by reaction with an epoxide compound, comprising the structure (I) 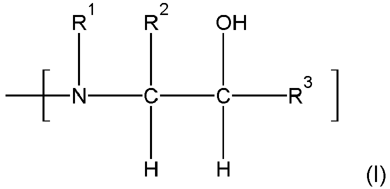
wherein R¹ is H, 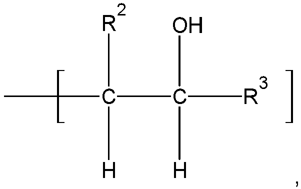 or part of the polyethylenimine, and
wherein R² is H or an organic group, R³ is H or an organic group, with the proviso that one of R² or R³ is H and wherein the polyethyleneimine has a weight average molecular weight Mw in the range of 40000 to 300000 g/mol before the reaction with the epoxide compound, wherein the Mw is determined by gel permeation chromatography (GPC) according to DIN 55672 part 3 (2016-03),
to at least a part of the surface and
optionally curing the preparation.

16. A three-dimensional article comprising a preparation, wherein the preparation comprises at least one binder, optionally at least one crosslinking agent, a silicate (A) and a polyethylenimine (B), modified by reaction with an epoxide compound, comprising the structure (I) 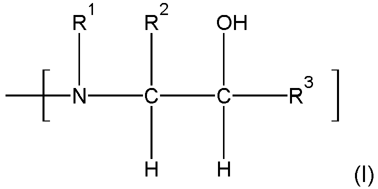 wherein R¹ is H, 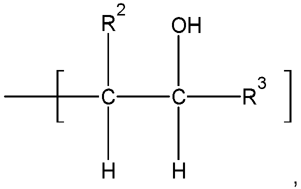 or part of the polyethylenimine, and wherein R² is H or an organic group, R³ is H or an organic group, with the proviso that one of R² or R³ is H and wherein the polyethyleneimine has a weight average molecular weight Mw in the range of 40000 to 300000 g/mol before the reaction with the epoxide compound, wherein the Mw is determined by gel permeation chromatography (GPC) according to DIN 55672 part 3 (2016-03).

## Patentansprüche

1. Verwendung einer Zusammensetzung als Rheologiesteuerungsmittel, umfassend
(A) Silikat und
(B) Polyethylenimin, modifiziert durch Reaktion mit einer Epoxidverbindung, mit der Struktur (I) 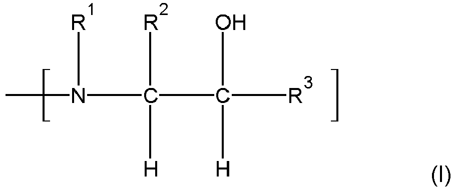 worin R¹ H 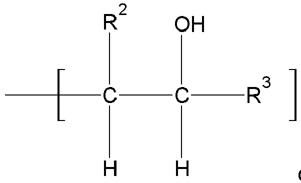 oder ein Teil des Polyethylenimins ist, und worin R² H oder eine organische Gruppe ist, R³ H oder eine organische Gruppe ist, mit der Maßgabe, dass eine von R² oder R³ H ist und wobei das Polyethylenimin vor der Reaktion mit der Epoxidverbindung ein gewichtsmittleres Molekulargewicht Mw im Bereich von 40000 bis 300000 g/mol hat, wobei das Mw durch Gelpermeationschromatographie (GPC) nach DIN 55672 Teil 3 (2016-03) bestimmt wird.

2. Verwendung der Zusammensetzung nach Anspruch 1, wobei das Silikat (A) aus Ton, Siliciumdioxid und deren Mischungen ausgewählt ist.

3. Verwendung der Zusammensetzung nach Anspruch 1 oder 2, wobei R² und R³ unabhängig voneinander ausgewählt sind aus Kohlenwasserstoffgruppen, organischen Gruppen, die eine Ethergruppe umfassen, und organischen Gruppen, die eine Estergruppe umfassen.

4. Verwendung der Zusammensetzung nach einem der vorhergehenden Ansprüche, wobei die Komponente (B) als Salz mit einer Säure ausgewählt aus mindestens einer Carbonsäure, Phosphorsäure, Phosphonsäure oder Sulfonsäure vorliegt.

5. Verwendung der Zusammensetzung nach einem der vorhergehenden Ansprüche, wobei die Komponente (B) als Lösung in einem hochsiedenden Lösungsmittel mit einem Siedepunkt von mindestens 250 °C bei 100 kPa bereitgestellt wird.

6. Verwendung der Zusammensetzung nach Anspruch 5, wobei die Lösung bei 23 °C und bei 100 kPa flüssig ist.

7. Verwendung der Zusammensetzung nach Anspruch 5 oder 6, wobei das hochsiedende Lösungsmittel einen Polyether umfasst.

8. Verwendung der Zusammensetzung nach einem der vorhergehenden Ansprüche, wobei die Komponente B durch Umsetzung eines Polyethylenimins mit mindestens einer Verbindung mit mindestens einer Epoxidgruppe erhältlich ist.

9. Verwendung der Zusammensetzung nach einem der vorhergehenden Ansprüche in einer nichtwässrigen Zubereitung.

10. Verwendung der Zusammensetzung nach einem der vorhergehenden Ansprüche, wobei die Zusammensetzung 0,1 bis 100,0 Gew.-% der Komponente (B), berechnet auf das Gewicht der Komponente (A), umfasst.

11. Verwendung der Zusammensetzung nach einem der vorhergehenden Ansprüche in einer Zubereitung, die ein Bindemittel umfasst, das mindestens eines aus Alkydharzen, ungesättigten Polyesterharzen, Vinylesterharzen, Acrylatharzen, Epoxidharzen, Polyurethanharzen, Polyaspartatharzen und silylmodifizierten Polymeren umfasst.

12. Verwendung der Zusammensetzung nach einem der vorhergehenden Ansprüche, wobei die Zubereitung als ein Satz von Teilen bereitgestellt wird, die mindestens ein Bindemittelmodul und mindestens ein Vernetzungsmodul umfassen.

13. Satz von Teilen, umfassend mindestens ein Bindemittelmodul und mindestens ein Vernetzungsmodul, wobei mindestens eines der Module ein Silikat (A) und ein Polyethylenimin (B) umfasst, modifiziert durch Reaktion mit einer Epoxidverbindung, umfassend die Struktur (I) 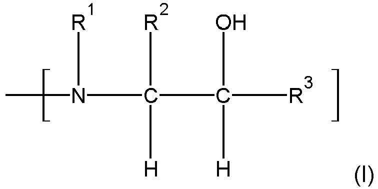 worin R¹ H 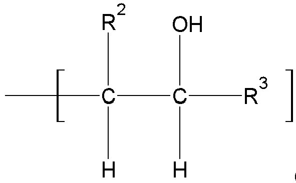 oder ein Teil des Polyethylenimins ist, und worin R² H oder eine organische Gruppe ist, R³ H oder eine organische Gruppe ist, mit der Maßgabe, dass eines von R² oder R³ H ist und wobei das Polyethylenimin vor der Reaktion mit der Epoxidverbindung ein gewichtsmittleres Molekulargewicht Mw im Bereich von 40000 bis 300000 g/mol aufweist, wobei das Mw durch Gelpermeationschromatographie (GPC) gemäß DIN 55672 Teil 3 (2016-03) bestimmt wird.

14. Satz von Teilen nach Anspruch 13, wobei das Bindemittelmodul ein Epoxidharz umfasst.

15. Ein Verfahren, das die Schritte umfasst
- Bereitstellen eines dreidimensionalen Gegenstandes mit einer Oberfläche
- Auftragen einer Zubereitung, wobei die Zubereitung mindestens ein Bindemittel, gegebenenfalls mindestens einen Vernetzer, ein Silikat (A) und ein Polyethylenimin (B) umfasst, modifiziert durch Reaktion mit einer Epoxidverbindung, umfassend die Struktur (I) 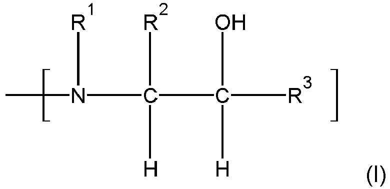
worin R¹ H 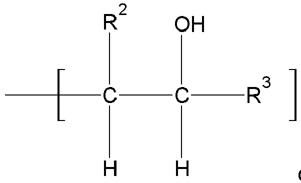 oder ein Teil des Polyethylenimins ist, und
worin R² H oder eine organische Gruppe ist, R³ H oder eine organische Gruppe ist, mit der Maßgabe, dass eine von R² oder R³ H ist und wobei das Polyethylenimin vor der Reaktion mit der Epoxidverbindung ein gewichtsmittleres Molekulargewicht Mw im Bereich von 40000 bis 300000 g/mol hat, wobei das Mw durch Gelpermeationschromatographie (GPC) nach DIN 55672 Teil 3 (2016-03) bestimmt wird,
zumindest auf einen Teil der Oberfläche und
Gegebenenfalls Aushärtung der Zubereitung.

16. Dreidimensionaler Gegenstand, umfassend eine Zubereitung, wobei die Zubereitung mindestens ein Bindemittel, gegebenenfalls mindestens einen Vernetzer, ein Silikat (A) und ein durch Reaktion mit einer Epoxidverbindung modifiziertes Polyethylenimin (B) umfasst, umfassend die Struktur (I) 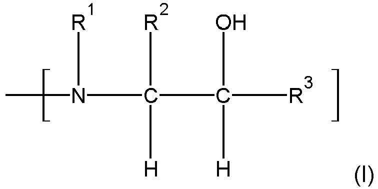 worin R¹ H 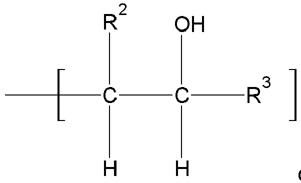 oder ein Teil des Polyethylenimins ist, und worin R² H oder eine organische Gruppe ist, R³ H oder eine organische Gruppe ist, mit der Maßgabe, dass eines von R² oder R³ H ist und wobei das Polyethylenimin vor der Reaktion mit der Epoxidverbindung ein gewichtsmittleres Molekulargewicht Mw im Bereich von 40000 bis 300000 g/mol aufweist, wobei das Mw durch Gelpermeationschromatographie (GPC) gemäß DIN 55672 Teil 3 (2016-03) bestimmt wird.

## Revendications

1. Utilisation d'une composition en tant qu'agent de contrôle de la rhéologie comprenant
(A) silicate et
(B) une polyéthylénimine, modifiée par réaction avec un composé époxyde, comprenant la structure (I) 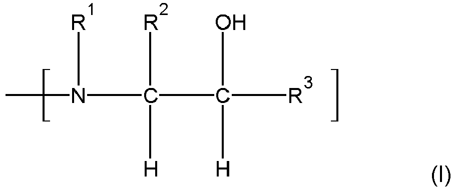 où R¹ est H, 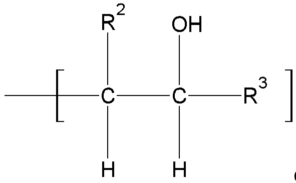 ou une partie de la polyéthylènemine, et où R² est H ou un groupe organique, R³ est H ou un groupe organique, à condition que l'un des groupes R² ou R³ soit H et où la polyéthylèneimine a un poids moléculaire moyen en poids Mw compris entre 40000 et 300000 g/mol avant la réaction avec le composé époxyde, dans lequel le M_{W} est déterminé par chromatographie par perméation sur gel (GPC) selon la norme DIN 55672 partie 3 (2016-03).

2. Utilisation de la composition selon la revendication 1, dans laquelle le silicate (A) est choisi à partir d'argile, de silice et de mélanges de celles-ci.

3. Utilisation de la composition selon la revendication 1 ou 2, dans laquelle R² et R³ sont sélectionnés indépendamment parmi les groupes hydrocarbyles, les groupes organiques comprenant un groupe éther et les groupes organiques comprenant un groupe ester.

4. L'utilisation de la composition conformément à l'une quelconque des revendications précédentes, dans laquelle le composant (B) est présent sous forme de sel avec un acide choisi parmi au moins un des acides carboxylique, phosphorique, phosphonique ou sulfonique.

5. L'utilisation de la composition conformément à l'une quelconque des revendications précédentes, dans laquelle le composant (B) est fourni sous forme de solution dans un solvant à point d'ébullition élevé ayant un point d'ébullition d'au moins 250 °C à 100 kPa.

6. Utilisation de la composition selon la revendication 5, dans laquelle la solution est liquide à 23 °C et à 100 kPa.

7. Utilisation de la composition selon la revendication 5 ou 6, dans laquelle le solvant à point d'ébullition élevé comprend un polyéther.

8. L'utilisation de la composition conformément à l'une quelconque des revendications précédentes, dans laquelle le composant B peut être obtenu par réaction d'une polyéthylénimine avec au moins un composé ayant au moins un groupe époxyde.

9. L'utilisation de la composition selon l'une quelconque des revendications précédentes dans une préparation non aqueuse.

10. L'utilisation de la composition selon l'une quelconque des revendications précédentes, dans laquelle la composition comprend de 0,1 à 100,0 % en poids du composant (B), calculé sur le poids du composant (A).

11. L'utilisation de la composition selon l'une quelconque des revendications précédentes dans une préparation comprenant un liant comprenant au moins une des résines alkydes, des résines polyester insaturées, des résines vinylester, des résines acrylates, des résines époxy, des résines polyuréthanes, des résines polyaspartiques et des polymères modifiés au silyle.

12. L'utilisation de la composition selon l'une quelconque des revendications précédentes, dans laquelle la préparation est fournie sous la forme d'un kit de pièces comprenant au moins un module de liant et au moins un module de réticulation.

13. Kit de pièces comprenant au moins un module de liant et au moins un module de réticulation, dans lequel au moins un des modules comprend un silicate (A) et une polyéthylénimine (B), modifiés par réaction avec un composé époxyde, comprenant la structure (I) 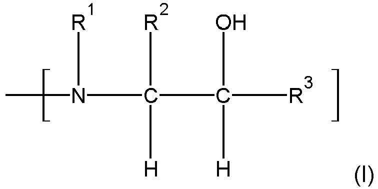 où R¹ est H, 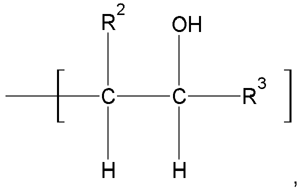 ou une partie de la polyéthylénimine, et où R² est H ou un groupe organique, R³ est H ou un groupe organique, à condition que l'un des R² ou R³ soit H et dans lequel la polyéthylèneimine a un poids moléculaire moyen en poids Mw compris entre 40000 et 300000 g/mol avant la réaction avec le composé époxyde, dans lequel le Mw est déterminé par chromatographie par perméation sur gel (GPC) conformément à la norme DIN 55672 partie 3 (2016-03).

14. Kit de pièces selon la revendication 13 dans lequel le module de liant comprend une résine époxy.

15. Un processus comprenant les étapes suivantes :
- fournir un article tridimensionnel ayant une surface
- application d'une préparation dans laquelle la préparation comprend au moins un liant, éventuellement au moins un agent de réticulation, un silicate (A) et une polyéthylenimine (B), modifiée par réaction avec un composé époxyde, comprenant la structure (I) 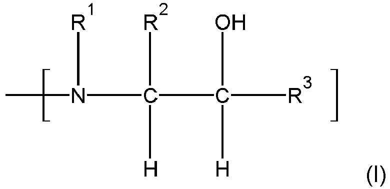 où R¹ est H, 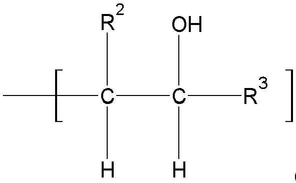 ou une partie de la polyéthylènemine, et où R² est H ou un groupe organique, R³ est H ou un groupe organique, à condition que l'un des groupes R² ou R³ soit H et où la polyéthylèneimine a un poids moléculaire moyen en poids Mw compris entre 40000 et 300000 g/mol avant la réaction avec le composé époxyde, dans lequel le M_{W} est déterminé par chromatographie par perméation sur gel (GPC) selon la norme DIN 55672 partie 3 (2016-03),
à au moins une partie de la surface et
en option durcissement de la préparation.

16. Article tridimensionnel comprenant une préparation, dans lequel la préparation comprend au moins un liant, éventuellement au moins un agent de réticulation, un silicate (A) et une polyéthylenimine (B), modifiés par réaction avec un composé époxyde, comprenant la structure (I) 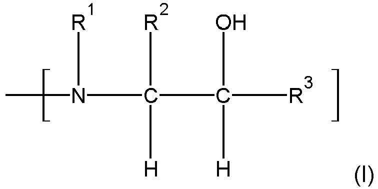 où R¹ est H, 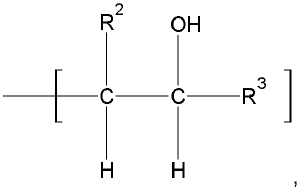 ou une partie de la polyéthylénimine, et où R² est H ou un groupe organique, R³ est H ou un groupe organique, à condition que l'un des R² ou R³ soit H et dans lequel la polyéthylèneimine a un poids moléculaire moyen en poids Mw compris entre 40000 et 300000 g/mol avant la réaction avec le composé époxyde, dans lequel le Mw est déterminé par chromatographie par perméation sur gel (GPC) conformément à la norme DIN 55672 partie 3 (2016-03).
